# EUROPEAN PATENT APPLICATION

(11) **EP 2 317 822 A1**
(43) Date of publication of application: **04.05.2011**
(21) Application number: 09013641.7
(22) Date of filing: 29.10.2009
(51) Int. Cl.: H04W 76/04, H04W 36/14, H04W 88/06

(54) **Enhancement of the attachement procedure for re-attaching a UE to a 3GPP access network**

(71) Applicant: Panasonic Corporation, Kadoma-shi Osaka 571-8501 (JP)
(72) Inventor: Velev, Genadi, 63225 Langen (DE); Bachmann, Jens, 63225 Langen (DE); Ikeda, Shinkichi, Chuo-ku Osaka 540-6207 (JP)
(74) Representative: Grünecker, Kinkeldey, Stockmair & Schwanhäusser Anwaltssozietät

(57) **Abstract**

The invention relates to methods for (re)attaching a UE to a 3GPP access network and for storing bearer context information of a UE upon handover from a 3GPP access network to a non-3GPP access network. Furthermore, the invention relates to 3GPP network nodes, such as mobility management entity, serving gateway and packed data gateway, and a UE that are specially adapted to perform these methods. In order to decrease of the delay time during (re)attachment of a UE to a 3GPP access network, the invention proposes to maintain context information on data bearer(s) of a UE within the 3GPP access network and the UE, while the UE is not attached to the 3GPP access network, so that data bearer context information for this UE is available and can be used for the (re)activation of data bearer(s) once the UE is attaching to the 3GPP access network again.

## Description

### FIELD OF THE INVENTION

The invention relates to methods for (re)attaching a user equipment to a 3GPP access network and for storing bearer context information of a user equipment upon handover from a 3GPP access network to a non-3GPP access network. Furthermore, the invention relates to 3GPP network nodes, such as mobility management entity, serving gateway and packed data gateway, and a user equipment that are specially adapted to perform these methods.

### TECHNICAL BACKGROUND

The 3^{rd} Generation Partnership Project (3GPP) organization specifies the architecture of mobile cellular networks like Global System for Mobile Communications (GSM) and Universal Mobile Telecommunications System (UMTS). The latest mobile network architecture defined by the 3GPP is called Evolved 3GPP Packet Switched Domain - also known as the Evolved Packet System (EPS).

The EPS combines an Evolved Packet Core (EPC) network that is able to connect a new generation of an access network technology called Evolved Universal Terrestrial Radio Access Network (E-UTRAN) as well as the pre-successor of the E-UTRAN called Universal Terrestrial Radio Access Network (UTRAN). A description of the EPS can be found in 3GPP TS 23.401: "General Packet Radio Service (GPRS) enhancements for Evolved Universal Terrestrial Radio Access Network (E-UTRAN) access", version 8.7.0, October 2009 (available at http://www.3gpp.org and incorporated herein by reference). The 3GPP EPS is also able to provide connectivity to mobile terminals (also known as User Equipments (UE)) attached non-3GPP access networks.

3GPP TS 23.402: "Architecture enhancements for non-3GPP accesses", version 8.7.0, October 2009 (available at http://www.3gpp.org and incorporated herein by reference) describes the inter-connection between the EPC and the non-3GPP access networks. The 3GPP access networks are based on access technologies standardized by the 3GPP organization. The non-3GPP access networks are based on access technologies defined by other organizations like Institute of Electrical and Electronics Engineers (IEEE) and 3^{rd} Generation Partnership Project 2 (3GPP2). For example two technologies defined by the IEEE that may interwork with the EPC are WLAN (Wireless Local Area Network), i.e. the IEEE standard 802.11 family, and WiMAX (Worldwide Interoperability for Microwave Access), also known as the IEEE standard 802.16 family.

3GPP defines a mobile network as a Public Land Mobile Network (PLMN) that is established and operated by an operator for providing mobile telecommunications services. A UE subscribed to 3GPP services has a Home PLMN (HPLMN) that maintains the subscription data and allowed services and QoS levels. When UE is attached to a network different from the HPLMN, the UE is indicated as roaming node and the visited network is denoted as visited PLMN (VPLMN) - please note that the UE is also sometimes referred to as a Mobile Node (MN) in this context.

The 3GPP specifies two data packet gateways located in the EPC supporting the UE's mobility - Serving Gateway (SGW) and Packet Data Network Gateway (PGW). The SGW terminates the interface towards the radio access networks, e.g. the UTRAN or the E-UTRAN. The PGW performs UE IP address allocation and packet filtering (e.g. deep packet inspection, packet screening) in order to map the UE's traffic to appropriate Quality of Service (QoS) level. The PGW performs the function of a home agent (HA), in case of MlPv6 (Mobile IPv6) based mobility management, or the function of a Local Mobility Anchor (LMA), in case Proxy MIPv6 protocols are used for mobility management.

### EPS Architecture

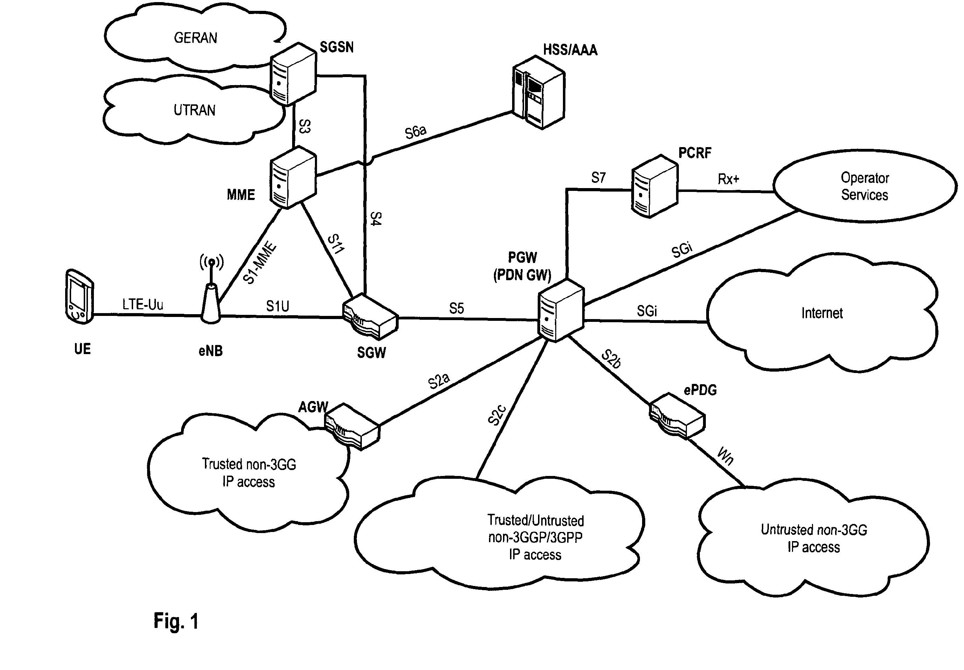

Fig. 1 shows an EPS architecture where the PGW is connected to the 3GPP access networks (independent of the access technology type, i.e. UTRAN, E-UTRAN) via the so-called S5 interface, i.e. to the SGW, and further to the non-3GPP access network via the so-called S2a interface, i.e. to the Access Gateway (AGW) or via the so-called S2b interface, i.e. to the evolved Packet Data Gateway (ePDG). Further, the UE may also to connect to the PGW when attached to the non-3GPP access network using the so-called S2c interface when employing Dual Stack MIPv6 (DSMIPv6).

When the UE is attached to the 3GPP access network, the UE is connected to the eNode B (NB) or to the evolved Node B (eNode B) that terminates the air interface. The eNode B is connected to the SGW via the S1-U interface (i.e. the user planet interface for user plane data). The S5 interface between the SGW and the PGW can be based either on the GPRS Tunneling Protocol (GTP) or the Proxy MIPv6 (PMIPv6) protocol. The S1-U interface is based on the GTP protocol according to the current 3GPP specifications. In the non-3GPP access, the S2a, respectively S2b interface between the AGW, respectively ePDG and the PGW is based on the PMIPv6 protocol.

### EPS QoS concept

### PDN Connection

The mobile network, i.e. the EPS, provides IP connectivity between the UE and an external packet data network (PDN). In the 3GPP terminology, this is referred to as PDN Connectivity Service and the data flow between the UE and the PGW is usually referred to as a PDN connection. For each PDN connection the UE has a different IP configuration, i.e. a different IPv4 address and/or an IPv6 prefix. A PDN connection is represented by an Access Point Name (APN). When the UE requests connectivity during the attach procedure to 3GPP access network, the UE usually indicates the APN to the Mobility Management Entity (MME) in the 3GPP access network or to the AGW/ePDG in the non-3GPP access network (see Fig. 1).

In case of PMIP is used for mobility management, the MME (or correspondingly the AGW/ePDG) chooses a proper PGW of the EPS, which can provide connectivity to the desired APN. In case of using DSMIPv6 between the UE and the PGW is used for mobility management, the UE itself can choose the PGW.

The (initial) attach procedure of the UE to the EPS is described in 3GPP TS 23.401, section 5.3.2 and is incorporated herein by reference.

### EPS bearers

The PDN connectivity service is provided by a so-called EPS bearer. A UE may run multiple applications, such as VoIP call and FTP download simultaneously, and each application could have different QoS requirements, i.e. different QoS parameters like packet delay and/or packet delay jitter, packet loss rate, guaranteed bit rate, etc. The 3GPP defines that the different EPS bearers meet the different QoS requirements of the different applications. An EPS bearer uniquely identifies traffic flows that receive a common QoS treatment between a UE and a PGW. There could be multiple applications with different QoS requirements to the same PDN, i.e. to the same PDN connection, or just one application per PDN connection. So to say, a PDN connection is provided by one or more EPS bearers to the UE.

As specified in 3GPP TS 23.401, when the UE connects to a PDN, one EPS bearer is established and remains established throughout the lifetime of the PDN connection to provide the UE with always-on IP connectivity to that PDN. This one bearer is referred to as the "default bearer". A default EPS bearer context is activated, when the UE requests a PDN connection, i.e. a new default EPS bearer is set up for every new PDN connection.

Any additional EPS bearer that is established for the same PDN connection is referred to as a dedicated bearer. A dedicated EPS bearer context is always linked to a default EPS bearer context and represents additional EPS bearer resources between the UE and the PDN. The decision to establish or modify a dedicated bearer can only be taken by the EPC, and the bearer level QoS parameter values are always assigned by the EPC. Therefore, the MME shall not modify the bearer level QoS parameter values received on the S11 reference point during establishment or modification of a dedicated bearer.

In the 3GPP architecture, establishment of dedicated bearer is triggered by the Policy Control and Charging Rules Function (PCRF) either to the PGW (in case of using GTP on the S5 interface) or to SGW (in case of using PMIP on the S5 interface). The SGW informs the MME via the S11 interface about the setup of a dedicated bearer with the corresponding QoS parameters and QoS Class Identifier (QCI) level. The MME triggers the eNode B to establish the corresponding S1 bearer (between eNode B and the SGW) and radio bearer (between eNode B and UE on the air interface).

This procedure described in 3GPP TS 23.401, section 5.4.1 and is incorporated herein by reference.

The EPS bearers are classified into two categories based on the nature of the QoS they provide: Minimum Guaranteed Bit Rate (GBR) bearers and Non-GBR bearers. A GBR bearer is used for applications such as VoIP, for which dedicated resources are reserved during the bearer establishment procedure. A non-GBR bearer does not guarantee any particular bit rate, and therefore, no resources are reserved permanently to the bearer.

In the current 3GPP EPS specification the UE can have maximum 8 user plane EPS bearers simultaneously, independent of the number of PDN connections. Several applications (or data flows) can be mapped onto one EPS bearer. Each bearer has an associated QCI. Each QCI is characterized by priority, packet delay budget and acceptable packet loss rate. The data traffic mapped to the same EPS bearer receive the same packet forwarding treatment (e.g. scheduling policy, queue management policy, rate shaping policy, RLC configuration, etc.). A limited number of QCIs have been standardized so that vendors can all have the same understanding of the underlying service characteristics and thus provide the corresponding forwarding treatment.

As mentioned above the S5 interface can be based either on GTP or on PMIPv6 protocol. For a GTP-based S5 interface, the EPS bearer consists of a concatenation of S5 bearer (PGW ↔ SGW), S1 bearer (SGW ↔ eNode B) - strictly speaking, a S1-U bearer for the user plane traffic - and a radio bearer (eNode B↔ UE). An S5 bearer transports the packets of an EPS bearer between a PGW and a SGW. The SGW stores a one-to-one mapping between an S1 bearer and an S5 bearer. The bearer is identified in the corresponding gateway by the GTP tunnel endpoint ID (TEID) across both interfaces, i.e. the SGW identifies the S1 bearer by the GTP-TEID (also: S1-TEID) used for the S1 interface and the SGW identifies the S5 bearer by the GTP-TEID (also: S5-TEID) used for the S5 interface. An S1 bearer transports the packets of an EPS bearer between the SGW and an eNode B. A radio bearer transports the packets of an EPS bearer between a UE and an eNodeB.

For PMIP-based S5 interface, the EPS bearer is a concatenation of IP connectivity between PGW and SGW, one S1 bearer and one radio bearer. In other words, in case of a PMIP-based S5 interface being used, strictly speaking, there is no "S5 bearer", but IP connectivity between the PGW and the SGW is provided.

### EPS Mobility Management and Connection Management

The 3GPP specification defines two mobility management states: REGISTERED and DEREGISTERED. When the UE is in the DEREGISTERED state, the MME has no valid location or routing information for the UE, and thus, the UE is not reachable. In DEREGISTERED state the UE is most probably either switched off, or in the non-3GPP access or out of coverage area. However, in DEREGISTERED state some security context information can still be stored in the UE and in the MME, e.g. to reduce the message exchange and the time needed for establishing a security association between MME and UE in each attach procedure.

In REGISTERED state, the UE is attached either to the E-UTRAN or to the GERAN/UTRAN access and the UE can receive EPS services. The MME knows the UE location at least in accuracy of the tracking area. The current 3GPP specification defines that in REGISTERED state, the UE shall always have at least one active PDN connection. Since at least one PDN connection, i.e. a default EPS bearer, is set up, both security context and EPS bearer context are available at the MME.

In REGISTERED mobility state, the UE can be in two different connections management states: IDLE and CONNECTED state. The UE is in IDLE state when there is no data transmitted and the radio resources are released, but the UE still has a valid IP configuration. In IDLE state there is no Non Access Stratum (NAS) signalling connection between the UE and the network, i.e. the MME. In IDLE state, when the UE moves and detects a new tracking area, the UE performs the Tracking Area Update (TAU) procedure, which updates the UE location in the MME. Also, during the IDLE state there is no S1 bearer between the eNode B and the SGW (and thus also no S1 bearer context stored in eNode B and SGW).

When a NAS signalling connection needs to be established between the UE and the MME, e.g. due to the TAU procedure when moving to a new tracking area, the UE and the MME shall enter the CONNECTED state. Initial NAS messages that initiate a transition from IDLE to CONNECTED state are Attach Request, Tracking Area Update Request, Service Request or Detach Request (see 3GPP TS 23.401, sections 53.3.2, 5.3.3, 5.3.4, and 5.3.8). When the UE is in the IDLE state, the UE and the network may be unsynchronized, i.e. the UE and the network may have different sets of established EPS bearers. When the UE and the MME enter the CONNECTED state, the set of EPS Bearers is synchronized between the UE and network.

As it is seen from above, in the CONNECTED state the UE and the MME have an active NAS signalling connection. This is usually the case when the UE has an active data flow and the corresponding S1 connection, as well as the radio resources are allocated for that data flow. In other words, the UE has an active radio and S1 bearers. In CONNECTED state, the UE location is known in the MME with the accuracy of a serving eNode B and the mobility of UE is handled by the handover procedure controlled by the network. When the network detects that the UE is not sending/receiving data, the network (usually the eNode B) may decide to release the radio resources, meaning that the S1 bearer is also released and the UE should go to IDLE state.

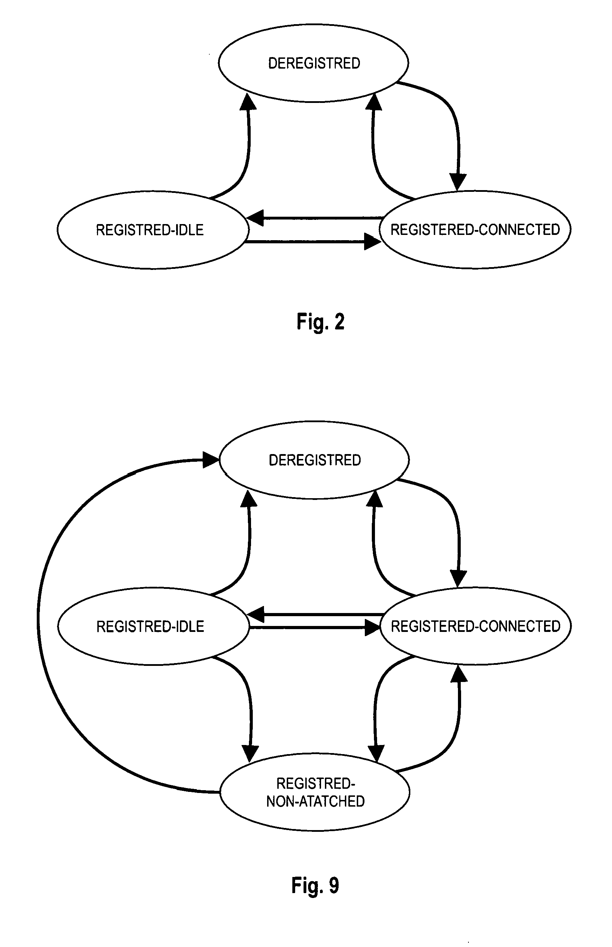

In general, the mobility states and the connection states are independent of each other, e.g. transition from REGISTERED to DEREGISTERED mobility state can occur regardless of the connection state. However, the UE can have a connection state, i.e. IDLE or CONNECTED, only when the UE is in REGISTERED mobility state. A combined state/mode could be described as REGISTERED-IDLE or REGISTERED-CONNECTED state. Fig. 2 shows a simplified state transition diagram of the different states discussed above.

### Policy Control and Charging (PCC) in 3GPP

Important service applications in 3GPP EPS network will presumably be Voice-over-IP (VoIP) and other real-time multimedia applications. For the setup of these applications 3GPP has standardized the IP Multimedia Subsystem (IMS) architecture. The IMS comprises all core network elements for provision of multimedia services. IP multimedia services are based on an IETF defined session control capability (e.g. Session Initiation Protocol (SIP) - see IETF RFC 3261, available at http://www.ietf.org) in order to allow access independence and to maintain a smooth interoperation with wireline terminals across the Internet. Thus, the IMS is defined firstly to allow a MN (that is a UE in the IMS terminology) to access multimedia services and secondly to trigger the setup of the required resources within the mobile network. One element of the IMS is the Application Function (AF), which applies the multimedia service parameters to admit and reserve the resources over the transport network.

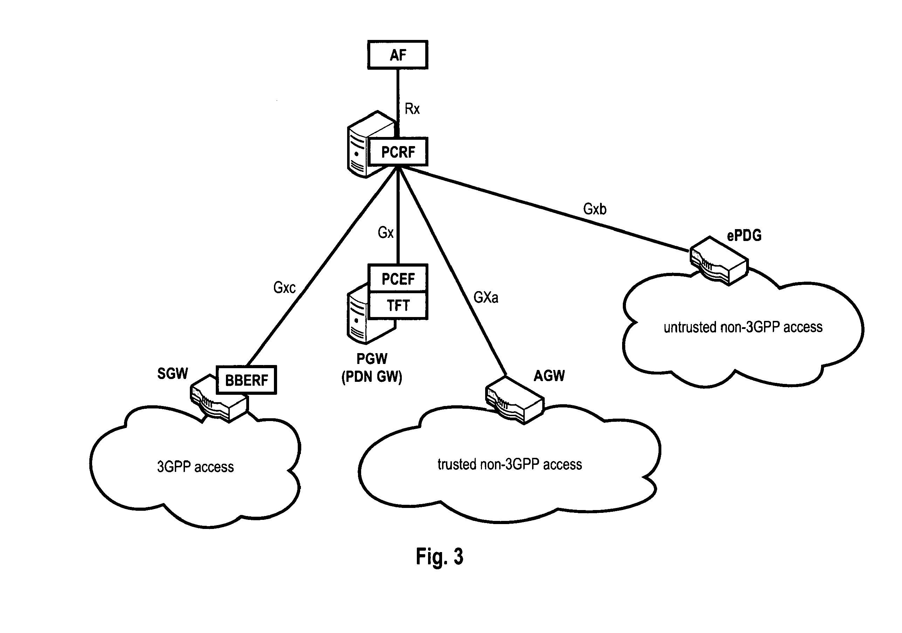

The AF interacts with the Policy Control and Charging (PCC) system in order to admit and reserve the needed resources for the multimedia services. The PCC system is based on a service data flow level. The PCC system takes care about the mapping of service data flows to EPS bearer and resource reservations for QoS, as well as event reporting for service data flows. A high-level overview of the PCC system, i.e. the PCC functions and the corresponding interfaces between the functions, is depicted in Fig. 3, wherein the individual PCC functions and their possible nodes implementing same are indicated by the rectangles at the respective nodes of the 3GPP EPS architecture.

The AF triggers the network-based setup of EPS bearer. The AF communicates with the Policy Control and Rules Function (PCRF) via the Rx-interface to transfer dynamic session information, required for PCRF to take decisions about the bearer setup. Such session information may be flow parameters based on Session Description Protocol (SDP) parameters of the multimedia service, which may contain IP 5-tuple parameters (Source Address, Destination Address, source/destination port, protocol ID). The PCRF decides on the rules for treating the packet flow in data plane. A PCC rule is defined as a set of information providing parameters for policy and charging control. A PCC rule is defined per service data flow (which is an aggregation of packet data flows: Several packet data flows may be aggregated in a service data flow. Several service data flows may be aggregated in one SAE bearer).

The PCC may be dynamic (generated at PCRF) and static (directly provisioned into the PCEF). The PCRF uses the following information (to make a decision for a PCC rule) received from:
- Service information from the AF (e.g. SDP information or other available application information) and/or
- The subscription information of the UE to calculate the proper QoS authorization (QoS class identifier, bit rate) and/or
- The requested QoS from the PCEF or
- Its own pre-defined information.

Based on the PCC rules for a service data flow, the PCRF calculates the flow filter parameters and signal them to Policy Control and Enforcement Function (PCEF) or to the Bearer Binding and Event Reporting Function (BBERF). The PCEF contains a Service Data Flow Template (SDFT, or Traffic Flow Template - TFT), which is applied for incoming packets to be mapped on the correct data flow. The PCEF is located in the PGW and it is relevant to the GTP-based S5 interface. If the EPS uses PMIP-based S5, S2a or S2b interfaces, the BBERF is located in the SGW, AGW or ePDG correspondingly. As it is depicted in Fig. 3, the PCRF communicates with the SGW, AGW or ePDG using Gxc, Gxa or Gxb interfaces correspondingly.

The charging aspect of the PCC is not regarded in this document because it is not of essential relevance for this invention. Detailed information about the PCC system can be found in 3GPP, Technical Specification 23.203; "Policy and charging control architecture", version 8.7.0, September 2009 (available at http://www.3gpp.org and incorporated herein by reference).

### Reattachment of UE to a 3GPP Access Network

At handover from 3GPP access to non-3GPP access, all the UE's bearers (radio bearers, S1 bearers and S5 bearers) in the 3GPP access network are deleted and UE's mobility state is transferred to DEREGISTERED. Deleted means that the resources reserved for the EPS bearers are released (where applicable) and the bearers' context information are deleted in UE, eNode B, MME and SGW.

When the UE hands over from non-3GPP to the 3GPP access, the UE has to initiate handover attach procedure, as described in 3GPP TS 23.401, section 5.3.2. The handover attach procedure results in long handover time (successive S5 and S1 bearer setup) and signalling message overhead.

When the UE is in the non-3GPP, usually the MME keeps the security context in the DEREGISTERED state. The security context contains the security related information of the UE obtained from the UE's Home Subscriber Server (HSS) or the AAA server. The availability of the security context in the MME avoids the repeated interaction between the MME and the HSS for the UE's authentication during the attach procedure.

A simplified handover attach procedure to the 3GPP access network is shown in Fig. 2. The dashed arrow between the MME and the HSS does not need to be performed when the MME stores security context for the UE. The MME first initiates the establishment of the S5 bearer between the SGW and the PGW. After this step is completed, the MME instructs the eNode B to start the establishment of the radio bearer and S1 bearer. The complete handover attach procedure takes a long time.

The handover from non-3GPP to 3GPP access may happen abrupt, because a non-3GPP access like WLAN has small cell coverage and the handover to the 3GPP access may not be predicted. Due to this characteristic of the non-3GPP access systems, it is important that the handover back to the 3GPP system is possible fast and seamless for the applications.

The QoS concept based on EPS bearers is most likely existing in the 3GPP access network only, but in the non-3GPP access there may be no such a concept.

### SUMMARY OF THE INVENTION

One object of the invention is to decrease of the delay time during (re)attachment of a user equipment to a 3GPP access network, for example upon handover from non-3GPP to 3GPP access network. Another object of the invention - which is partly connected to the previous object - is to minimize the message exchange when (re)attaching a user equipment to the 3GPP access network.

A further problem addressed by the invention and that particularly pertains to a scenario where the user equipments hands over from non-3GPP access network to a 3GPP access network, is that during the stay in the non-3GPP access, the UE may establish additional PDN connections and/or may initiate new data flows within an existing PDN connection. When the UE moves to the 3GPP access, procedures would be desirable to establish the proper corresponding bearer services for the data flows/PDN connections that were established in the non-3GPP access.

At least one of the objects and problems stated above is solved by the subject matter of the independent claims. Advantageous embodiments of the invention are subject to the dependent claims.

One aspect of the invention is the maintenance of context information in a 3GPP access network on data bearer(s) of a user equipment not attached to the 3GPP access network, so that data bearer context information for this user equipment is available once the user equipment is attaching to the 3GPP access network. Similarly, also the user equipment may maintain its context information on data bearers in the 3GPP access network, even if it is not attached thereto. One exemplary scenario where use of stored context information on the data bearers may be advantageously used is a user equipment reattaching to a 3GPP access network, for example upon having temporarily been detached therefrom, e.g. due to temporarily attaching to a non-3GPP access network.

This aspect of the invention may be further broken down to two sub-aspects: firstly, the operation of and procedures performed within the 3GPP access network and the user equipment upon the user equipment detaching from the 3GPP access network, and secondly, the operation of and procedures performed within the 3GPP access network and the user equipment upon the user equipment attaching to the 3GPP access network again..Overall, using these procedures the synchronization of data bearer context information between the user equipment and the 3GPP access network nodes, in particular the mobility management entity can be achieved.

Upon the user equipment detaching from the 3GPP access network, according to this first sub-aspect, the data bearer context information is not (immediately) deleted in at least the mobility management entity. Optionally, also the user equipment and/or the serving gateway connected to the user equipment and/or the packet data gateway may store the context information.

Hence, regarding the second sub-aspect, upon the user equipment attaching to the 3GPP access network again, there is context information on the user equipment's (previously and potentially presently used) data bearers available in the 3GPP access network (or more specifically the EPS). Please note that most likely but not necessarily the same mobility management entity that was serving the user equipment upon detachment from the 3GPP access network will also serve the user equipment upon reattaching to the 3GPP access network - if not, options on how to deal with such situation will be described further down below.

Assuming that there is data bearer context information available for a user equipment at the mobility management entity, the mobility management entity can immediately initiate the (re)establishment of the data bearers within the 3GPP access network in response to a (re)attach message received from the user equipment, that is commonly the first message transmitted by the user equipment to the core network (specifically to the MME) when attaching to the access network.

A further aspect of the invention is related to keeping the maintained bearer context information up to date in the 3GPP access network, while the user equipment is not connected to the 3GPP access network. For example, the user equipment could terminate or initiate new PDN connections or data flows while not being connected to the 3GPP access network that would result in a termination or activation of corresponding data bearers in the 3GPP access network. Accordingly, means are provided for informing at least the mobility management entity of the 3GPP access network on new data flows/PDN connections or the termination of data flows/PDN connections while the user equipment is not attached to the 3GPP access network, so that the mobility management entity can properly update the maintained user equipment's data bearer context information while the user equipment is not attached to the 3GPP access network. Accordingly, accurate context information on the data bearers is available when the user equipment is attaching to the 3GPP access network. This mechanism may also ensure that the data bearer context information of the user equipment are up-to-date even if the user equipment is not attached to the 3GPP access network, and in case the user equipment also maintains data bearer context information while not attached to the 3GPP access network, it may be ensured that the context information of user equipment and mobility management entity keep synchronized while the user equipment is not attached to the 3GPP access network.

One exemplary embodiment of the invention provides a method for (re)attaching a user equipment to a 3GPP access network. Such (re)attachment could be for example a handover attach from a non-3GPP access network to the 3GPP access network. In this method the user equipment transmits via the 3GPP access network a (re)attach message to a mobility management entity (MME) within the 3GPP access network. This (re)attach message requests the activation of data bearers of the user equipment for communication in the 3GPP access network and indicates to the mobility management entity that context information on (at least a part of) the data bearers (also referred to as "data bearer context information") is available to the mobility management entity. In response to the (re)attach message, the mobility management entity triggers the activation of the data bearers based on the data bearer context information maintained by the mobility management entity.

Please note that in one exemplary embodiment of the invention, the (re)attach message is the first message transmitted by the user equipment via the 3GPP access network to the mobility management entity upon (re)attaching thereto.

It should be noted that in embodiments of the invention, where the invention is implemented in EPS, the data bearers may be equivalent to the EPS bearers described previously, while the data bearer context information refer to the EPS bearer context information of the different EPS bearers that are maintained by the EPS nodes.

Furthermore, although the term "data bearers" is used in plural above, it should be noted that the user equipment may not always have multiple data bearers configured. There may be for example only one PDN connection with the default EPS bearer. In these situations, the (re)attach message obviously indicates to the mobility management entity that context information of the one single data bearer is available to the mobility management entity.

Available to the mobility management entity means that the context information on the data bearer(s) is either stored by the mobility management entity or can be retrieved from another mobility management entity that was previously serving the user equipment. In terms of delay reduction, it would be of course preferable that the context information is stored in the mobility management entity receiving the (re)attach message.

The data bearer context information may for example be available to the mobility management entity from a previous attachment of the user equipment to the 3GPP access network. In one example, the user equipment identifies the mobility management entity last serving the user equipment in the 3GPP access network within the (re)attach message, so that the (re)attach message be routed to this last serving mobility management entity, unless the network decides to change the serving mobility management entity of the user equipment, e.g. due to load balancing, change of the service area, etc.

The maintained data bearer context information may for example comprise information on a serving gateway of the 3GPP access network and on the serving gateway's GTP tunnel endpoint identifier of the GTP tunnel to a eNode B that was serving the user equipment in the 3GPP access network prior to handing over to a non-3GPP access network.

In one exemplary embodiment, the data bearer context information at the mobility management entity is identified by the data bearer information comprised in the (re)attach message.

The activation of the data bearers includes in some embodiments of the invention the reservation of resources for data transport based on the data bearer context information maintained at the mobility management entity and/or a serving gateway connected to the mobility management entity. For example, the activation of the data bearers may include the activation of a radio bearer for data transport between the user equipment and a eNode B serving the user equipment upon (re)attaching to the 3GPP access network. In addition or alternatively thereto, the activation of the data bearers may include the activation of a data tunnel between a serving gateway of the 3GPP access network and the eNode B for forwarding data of the user equipment. Further in addition or alternatively thereto, the activation of the data bearers may include the activation of a data tunnel between the serving gateway and a packet data gateway of the 3GPP access network for forwarding data of the user equipment, or the activation of a binding cache entry at the packet data gateway for forwarding data of the user equipment.

There are different options how the (re)attach message is indicating the data bearer context information being available. The (re)attach message may for example indicate:
- bearer identities of the data bearers to be activated, or
- the PDN connection identifiers and the number of data bearers per PDN connection, or
- a field or flag indicating to the mobility management entity that data bearer context information is available at the mobility management entity.

The (re)attach message itself may also be realized in different fashions. According to one embodiment of the invention the (re)attach message is either:
- a tracking area update message, in which the active flag is set or
- an extended tracking area update message including data bearer information for the data bearers to be established or
- an extended service request message including data bearer information for the data bearers to be established.

In one further embodiment of the invention, the (re)attach message is integrity protected. In this exemplary embodiment, the user equipment may for example assume that the mobility management entity it connects when reattaching to the 3GPP access network is the same mobility management entity that may have served the user equipment during a previous attachment to the 3GPP access network, so that the mobility management entity still maintains information on the security association between the user equipment and the mobility management entity.

Another embodiment of the invention relates to the operations performed upon a user equipment detaching from the 3GPP access network. This embodiment of the invention provides a method for storing bearer context information of a user equipment upon handover from a 3GPP access network to a non-3GPP access network. In response to the user equipment moving to the non-3GPP access network, resources of data bearers for the user equipment within the 3GPP access network are released, but the mobility management entity of the 3GPP access network, which served the user equipment, maintains (i.e. stores) the bearer context information of the data bearers.

Furthermore, also a packet data gateway connected to the mobility management entity (and serving the user equipment) may not delete its data bearer context information for the data bearers when the user equipment is performing a handover from a 3GPP access network to a non-3GPP access network.

Another embodiment of the invention is related to the user equipment establishing a new data flow or PDN connection while located in the non-3GPP access network. In this embodiment, the mobility management entity receives a signaling message indicating the establishment of a new data bearer for the user equipment, while the user equipment is not attached to the 3GPP access network, and the mobility management entity generates (and stores) data bearer context information for the new data bearer.

Please note that such signaling message, depending on the implementation of the invention, may for example be received from the user equipment via the non-3GPP access network, from the PCC, i.e. the PCRF server (which may or may not be collocated with the PGW in a single server), or the PGW.

Furthermore, in another embodiment of the invention, also a packet data gateway connected to the mobility management entity may receive a signaling message indicating the establishment of a new data bearer for the user equipment, while the user equipment is not attached to the 3GPP access network, and the packet data gateway may likewise generate (and store) bearer context information for the new data bearer.

Of course, the method for signaling the establishment of a new data bearer for the user equipment, while the user equipment is not attached to the 3GPP access network according to the different embodiments herein may be readily combined with the methods (re)attaching a user equipment to a 3GPP access network according to one of the different embodiments and examples described herein. Hence, the bearer information comprised in the (re)attach message may for example indicate at least one new data bearer established while the user equipment was not attached to the 3GPP access network.

Similar to the addition of context information for newly established data bearers of the user equipment while not attached to the 3GPP access network (e.g. while attached to a non-3GPP access network), there may also be a data bearer deletion defined in case the user equipment is for example terminating an application (or more precisely the associated data bearer) that was started while connected to the 3GPP access network. According to a further embodiment of the invention, the mobility management entity and/or a packet data gateway connected to the mobility management entity receive a signaling message requesting the deletion of the bearer context information of the user equipment, and delete the bearer context information of the user equipment in response to the signaling message while the user equipment is not attached to the 3GPP access network.

In addition of the data bearer context information, in another embodiment of the invention, the mobility management entity stores security context information of the user equipment, while the user equipment is (re)attached to the non-3GPP access network. Given that also the user equipment is maintaining a security context associated to the mobility management entity, this may allow for the use of ciphering and/or authentication (integrity protection) of messages exchanged between user equipment and mobility management entity immediately upon the user equipment reattaching to the 3GPP access network. Furthermore, while the user equipment is attached to a non-3GPP access network, the user equipment may use the stored security context information to cipher or integrity protect the signaling to the mobility management entity, whereas the signaling from the user equipment is used to update the bearer context information (i.e. establish a new bearer or delete an existing bearer) in the mobility management entity.

Besides defining the procedures and operation of various nodes in the EPS, such as mobility management entity serving gateway (SGW), packet data gateway (PGW), or PCC servers, and the user equipment, the invention also pertains to the implementation of these procedures and operations in the different network nodes. Accordingly, another embodiment of the invention provides a user equipment for use in a 3GPP access network. The user equipment is comprising a storage unit (such as for example a volatile or non-volatile memory) for storing data bearer context information of data bearers of the user equipment in the 3GPP access network. Furthermore, the user equipment has a communication unit. This communication unity may include a transmitter (or transmitting section) for transmitting various data from the user equipment and a receiver (or receiving section) for receiving various data at the user equipment. In response to the user equipment attaching to the 3GPP access network, the transmitter of the user equipment transmits a (re)attach message to a mobility management entity of the 3GPP access network. As outlined above, this (re)attach message is requesting the activation of data bearers of the user equipment for communication in the 3GPP access network and is further indicating to the mobility management entity that context information on (at least a part of the) data bearers to be activated is available to the mobility management entity. Furthermore, the communication unit is adapted to activate the data bearers based on the data bearer context information stored in said storage unit. This could be for example realized by exchanging respective control signaling with other EPS nodes, such as the eNode B, serving gateway and/or packet data gateway to serve the user equipment.

The user equipment according to another embodiment of the invention is further comprising a security module for integrity protecting the (re)attach message transmitted to the mobility management entity.

In a further embodiment of the invention, another user equipment for use in a 3GPP access network and a non-3GPP access network is provided which is comprising a storage unit for storing data bearer context information of data bearers of the user equipment in a 3GPP access network, and a communication unit for attach the user equipment to a 3GPP access network or a non-3GPP access network. Furthermore, this user equipment also includes a processing unit programmed to decide, while the user equipment is attached to the non-3GPP access network and in response to a new data flow, whether a new PDN connection or new data bearer would be required for the new data flow in the 3GPP access network. The processing unit is further programmed to update, in response to the decision, the data bearer context information in said storage unit. Please note that this user equipment may of course optionally additionally comprise the features of the user equipment described above, as will become apparent from the following disclosure.

In a further embodiment of the invention, the processing unit is programmed to update, in response to the termination of a PDN connection or activation of a new PDN connection or a data bearer, the data bearer context information in said storage unit.

In yet another embodiment of the invention, the processing unit is further programmed to cause a transmitter of the communication unit to send a signaling message via the non-3GPP access network to update a data bearer context information maintained for the user equipment by a mobility management entity in the 3GPP access network to account for the new/terminated PDN connection or the new/terminated data bearer.

The user equipment's storage unit may be further adapted to maintain data bearer context information of the user equipment, when the user equipment detaches from the 3GPP access network.

A further embodiment of the invention is providing a mobility management entity for use in a 3GPP access network. This mobility management entity comprises a storage unit for storing data bearer context information of data bearers of a user equipment, and for storing security context information of the user equipment, and a communication unit including a receiver for receiving a (re)attach message from the user equipment. As outlined previously, the (re)attach message is requesting the activation of data bearers of the user equipment for communication in the 3GPP access network and is indicating to the mobility management entity that context information on (at least a part of) the data bearers to be activated for the user equipment is available to the mobility management entity. In addition, the mobility management entity's communication unit is also adapted to trigger in response to the (re)attach message the activation of the data bearers based on the data bearer context information maintained by the mobility management entity for the user equipment.

The mobility management entity may optionally further include a security module for en/decrypting and/or authenticating data exchanged with the user equipment, wherein the security module is able to verify the integrity of the (re)attach message received from the user equipment.

The mobility management entity according to another embodiment of the invention has a communication unit adapted to trigger the activation of the data bearers, by causing an activation of a radio bearer for data transport between the user equipment and a eNode B serving the user equipment upon (re)attaching to the 3GPP access network, causing an activation of a data tunnel between a serving gateway of the 3GPP access network and the eNode B for forwarding data of the user equipment, and causing an activation of a data tunnel between the serving gateway and a packet data gateway of the 3GPP access network for forwarding data of the user equipment, or the activation of a binding cache entry at the packet data gateway for forwarding data of the user equipment.

A further aspect of the invention is the implementation of the different methods and procedures of the EPS nodes and the user equipment described herein in software. Hence, in a further embodiment of the invention, a computer readable storage medium is provided, that is storing instructions that, when executed by a processing unit of the user equipment, cause the user equipment to store data bearer context information of data bearers of the user equipment in the 3GPP access network and to transmit in response to the user equipment attaching to the 3GPP access network, a (re)attach message to a mobility management entity of the 3GPP access network. This (re)attach message is indicating that data bearer context information on data bearers of the user equipment for communication in the 3GPP access network is available to the mobility management entity. Furthermore, the instructions - upon their execution - cause the user equipment to activate the data bearers based on the stored data bearer context information. In one example, the instructions may cause the user equipment exchanging respective control signaling with other EPS nodes, such as the eNode B, serving gateway and/or packet data gateway to serve the user equipment to activate the data bearers.

In another embodiment of the invention, another computer readable storage medium is provided, that is storing instructions that, when executed by a processing unit of the user equipment, cause the user equipment to store data bearer context information of data bearers of the user equipment in a 3GPP access network, and to decide, while the user equipment is attached to the non-3GPP access network and in response to a new data flow, whether a new PDN connection or new data bearer would be required for the new data flow in the 3GPP access network. Furthermore, the instructions further cause the user equipment upon their execution to update, in response to the decision, the data bearer context information in said storage unit.

Another embodiment of the invention is related to a computer readable medium storing instructions that, when executed by a processing unit of a mobility management entity, causes the mobility management entity to store data bearer context information of data bearers of a user equipment, and to store security context information of the user equipment. The instructions further cause the mobility management entity to receive a (re)attach message from the user equipment. As outlined previously, the (re)attach message is indicating that data bearer context information for the user equipment for communication in the 3GPP access network is available to the mobility management entity. Moreover, the execution of the instructions further causes the mobility management entity to trigger in response to the (re)attach message the activation of the data bearers based on the data bearer context information maintained by the mobility management entity for the user equipment.

### BRIEF DESCRIPTION OF THE FIGURES

In the following the invention is described in more detail in reference to the attached figures and drawings. Similar or corresponding details in the figures are marked with the same reference numerals.
- **Fig.1**: shows an overview on the architecture of a 3GPP Evolved Packet System (EPS),
- **Fig. 2**: illustrates a simplified state transition diagram of the different states, including the DEREGISTERED state, the REGISTERED-IDLE and the REGISTERED-CONNECTED state defined for a 3GPP EPS system,
- **Fig. 3**: shows a high-level overview on the architecture of the Policy Control and Charging (PCC) system specified by the 3GPP,

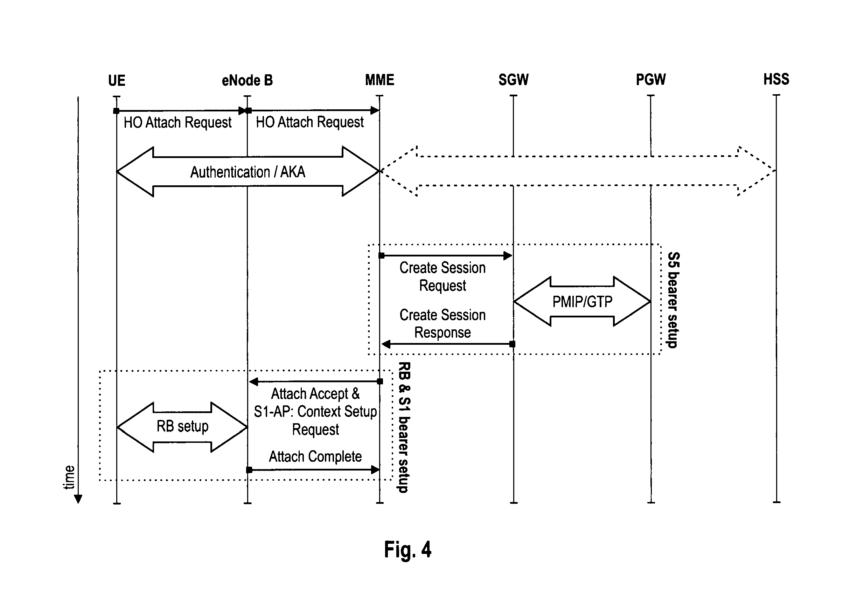

- **Fig. 4**: shows a handover attach procedure in a 3GPP EPS system,
- **Fig.5**: shows a signaling procedure for the EPS bearer pre-configuration triggered by the PCRF according to an exemplary embodiment of the invention,
- **Fig. 6**: shows a signaling flow for deactivating a UE's EPS bearer(s) in the 3GPP access network according to an exemplary embodiment of the invention, when the UE hands over to a non-3GPP access network,
- **Fig. 7 & 8**: show two exemplary signaling flows according to exemplary embodiments of the invention that allow the update of the bearer context in the MME and other 3GPP access network nodes (e,g, SGW and PGW), and
- **Fig. 9**: a simplified state transition diagram of the different states, including the DEREGISTERED state, the REGISTERED-IDLE, the REGISTERED- CONNECTED state and the REGISTERED-NON-ATTACHED state according to an exemplary embodiment of the invention.

### DETAILED DESCRIPTION OF THE INVENTION

The following paragraphs will describe various embodiments of the invention. It should be noted that the invention may be advantageously used for example in connection with a mobile communication system such as 3GPP LTE (Release 8) and LTE-A (Release 10) communication systems previously described, but the invention is not limited to its use in this particular exemplary communication network.

The explanations given in the Technical Background section above are intended to better understand the mostly 3GPP LTE (Release 8) and LTE-A (Release 10) specific exemplary embodiments described herein and should not be understood as limiting the invention to the described specific implementations of processes and functions in the mobile communication network. Nevertheless, the improvements to the random access procedure proposed herein may be readily applied in the architectures/systems described in the Technical Background section and may in some embodiments of the invention also make use of standard and improved procedures of theses architectures/systems.

One first aspect of the invention is the maintenance of context information in a 3GPP access network on data bearer(s) of a user equipment not attached to the 3GPP access network, so that same is available for use once the user equipment is attaching to the 3GPP access network. Hence, instead of deleting the context for the data bearer(s) within the nodes of the 3GPP access network, at least the mobility management entity of the user equipment maintains context information for a user equipment's data bearers once the user equipment detaches from the 3GPP access, e.g. due to a handover to another (non-3GPP) access network. Also the user equipment may optionally maintain its context information on data bearers in the 3GPP access network, even if it is not attached thereto. The stored context information on the user equipment's data bearer(s) within the 3GPP access network may be advantageously used is a user equipment reattaching to a 3GPP access network, for example upon having temporarily been detached therefrom, e.g. due to temporarily attaching to a non-3GPP access network.

This first aspect of the invention can be considered to address two sub-aspects On the one hand, the operation and procedures performed by 3GPP access network nodes, or more precisely at least the mobility management entity, and optionally of the user equipment upon the user equipment detaching from the 3GPP access network is improved such that the context information on the user equipment's data bearers is not deleted.

On the other hand operation of and procedures performed within the 3GPP access network and the user equipment upon the user equipment attaching to the 3GPP access network again are improved so as to make use of the stored context information in the (re)attachment procedure. Assuming that there is data bearer context information available for a user equipment at the mobility management entity, the mobility management entity can immediately initiate the (re)establishment of the data bearers within the 3GPP access network in response to a (re)attach message received from the user equipment, that is commonly the first message transmitted by the user equipment to the mobility management entity when attaching to the access network.

A further, second aspect of the invention is related to keeping the maintained context information up to date in the 3GPP access network, while the user equipment is not connected to the 3GPP access network. For example, the user equipment could terminate or initiate new PDN connections or data flows while not being connected to the 3GPP access network that would result in a termination or activation of corresponding data bearers in the 3GPP access network. Accordingly, means are provided for informing at least the mobility management entity of the 3GPP access network on new data flows/PDN connections or the termination of data flows/PDN connections while the user equipment is not attached to the 3GPP access network, so that the mobility management entity can properly update the maintained context information on the user equipment's data bearers while the user equipment is not attached to the 3GPP access network. Accordingly, accurate context information on the data bearers to be activated is available when the user equipment is attaching to the 3GPP access network.

In the following different exemplary embodiments of the invention will be described that exemplarily relate to the EPS (formed by EPC as the core network and the E-UTRAN as the radio access network that as used in 3GPP LTE (Release 8) and 3GPP LTE Advanced (Release 10)) discussed in the Technical Background section above as an example for a 3GPP access network. It should be noted that the principles of the invention may however also readily applied to other 3GPP-based core network architectures, such as the Core Network and UTRAN architecture of UMTS. The basic difference would be that the MME-like functionality is implemented in the SGSN (Serving GPRS Support Node) of the UMTS architecture, and the SGW and PGW would correspond to SGSN (Serving GPRS Support Node) and GGSN (Gateway GPRS Support Node) in UMTS.

### REGISTERED-NON-ATTACHED state

In accordance with the first aspect of the invention, according to one embodiment of the invention, at least the mobility management entity and optionally the user equipment maintain (at least temporarily) the bearer context information for the user equipment's data bearers while the user equipment is not connected to the 3GPP access network. In the EPS architecture this means that the MME serving the user equipment and optionally the user equipment (temporarily) maintain/store the EPS bearer context while the user equipment is not attached to the EPS (EPC & E-UTRAN). One the one hand, this state has similarities to the DEREGISTERED state outlined above, as the UE is detached from the EPS and EPC and E-UTRAN resources for the EPS bearers are not maintained. Also similar to the DEREGISTERED state, the MME has no valid location or routing information for the user equipment (and thus, the UE is not reachable) and may store some security context information. On the other hand, this state has similarities to the (REGISTRED-)IDLE state described previously herein, in that the MME (and UE) maintain the EPS bearer context information.

In the following, this state will refer to as a REGISTERED-NON-ATTACHED state.

The REGISTERED-NON-ATTACHED state introduced herein has an impact at least on the MME, and optionally further on the UE and SGW within the UE's user plane. Furthermore, in some exemplary implementation described herein, this state has also effect on the PGW.

The REGISTERED-NON-ATTACHED state can be viewed as a state having similarities to the REGISTERED-IDLE state and to the DEREGISTERD state. In the usual REGISTERED-IDLE state, the S5 bearers are active while the radio bearers and S1-U bearers for the user equipment are released. In the DEREGISTERED state all bearers are released and the MME and UE do not keep any EPS bearer context. The REGISTERED-NON-ATTACHED state is characterized by the following features:
The MME keeps the EPS bearer contexts and does not have location information about the UE. As a comparison, in the usual REGISTERED-IDLE state the MME keeps the EPS bearer contexts, but does have location information, which is needed in order to perform the paging procedure when data for the UE is arriving.

Fig. 9 shows a simplified state transition diagram of the different states, including the DEREGISTERED state, the REGISTERED-IDLE, the REGISTERED-CONNECTED state and the REGISTERED-NON-ATTACHED state according to an exemplary embodiment of the invention. The shown state transition diagram can be applied to the 3GPP access network entities - e.g. mobility management entity, serving gateway and packed data gateway - and the user equipment. As for Fig. 3 the arrows indicate the possible state transmissions between the different states. The state transitions from REGISTERED-IDLE or REGISTERED-CONNECTED to REGISTERED-NON-ATTACHED is a result of the user equipment detaching from the 3GPP access network, e.g. by attaching to a non-3GPP access network. Furthermore, if the user equipment is not reattaching to the 3GPP access network for a given amount of time (e.g. due to being turned off) or the user equipment switches off while attached to the non-3GPP access network, there is a state transition from the REGISTERED-NON-ATTACHED state to the DEREGISTERED state foreseen. Furthermore, if the user equipment and the mobility management entity are in REGISTERED-NON-ATTACHED state and the user equipment is reattaching to the 3GPP access network, the user equipment and the mobility management entity will transit into the REGISTERED-CONNECTED state.

### Implications of the REGISTERED-NON-ATTACHED state for SGW and PGW

In the REGISTERED-NON-ATTACHED state the location information is not needed, because no data will arrive at the SGW as the UE is not attached to the 3GPP access network. In the REGISTERED-NON-ATTACHED state the MME keeps the EPS bearer context independent whether the S5 bearer information in the SGW and PGW is deleted or not.

In one embodiment of the invention, the S5 bearer information in the PGW and SGW is kept after the user equipment detaches from the 3GPP access network. The maintenance of the S5 bearer information in PGW and SGW, while the user equipment is detached from the 3GPP access network, may also be considered a deactivation of the S5 bearer(s), i.e. the bearer states (e.g. the BCE) in PGW and SGW are kept, but they are not used for data packets forwarding. The bearer states (e.g. the stored information related to the EPS bearer like EPS bearer ID, QCI, QoS policy information, APN, IP version type, etc.) in the PGW and SGW depend on the protocol used for communication via the S5 interface (i.e. PMIP or GTP). For PMIP, the S5 bearer information is the Binding Cache Entry (BCE) in SGW (acting as the Mobility Access Gateway (MAG)) and the PGW (acting as the Local Mobility Anchor (LMA)) for appropriately routing the packets of the user equipment in the EPC. Hence, if PMIP is used, SGW and PGW may maintain the BCE for the user equipment but not using them for data packets forwarding, in response to the user equipment detaching from the EPS (e.g. in a handover to a non-3GPP access network). When GTP is used on the S5 interface, the S5 bearer information in the PGW is a routing entry containing filter for mapping of the incoming IP address information (destination and source IP addresses) to a GTP tunnel characterized by the GTP Tunnel Endpoint ID (TEID) that is identifying the entity on the other end of the GTP tunnel endpoint, e.g. the SGW. In the SGW, there is a routing entry binding 1-to-1 the GTP tunnel on the S5 interface to the GTP tunnel of the S1 interface. The GTP tunnel routing entries may also be referred to as a "binding" entry containing the mapping of the IP packets to the GTP tunnels similar to the mapping of IP packets to PMIP tunnels in case of PMIP. Having this, in the following the PMIP BCE and the GTP routing entry are both referred to as "binding cache entry" or "BCE".

One advantage of keeping an inactive BCE in the PGW and SGW is that in case a PDN connection is released during the UE is not attached to the 3GPP access network, the PGW could initiate a PDN connection release procedure to the SGW in the 3GPP access network. The PGW may determine the release of a bearer itself (e.g. after the UE stops communicating with a particular correspondent node) or the UE may inform the PGW on the PDN connection release when the UE is attached to a non-3GPP access network.

Then the EPS context information for the corresponding EPS bearer(s) in the PGW, SGW and MME are deleted as part of this procedure. Furthermore, if the UE establishes a new PDN connection in the non-3GPP access, the PGW can initiate a corresponding EPS bearer pre-establishment in the 3GPP access network so as to keep the EPS bearer context information for the user equipment up-to-date within the EPS nodes. For example the PGW informs the SGW about the new PDN connection, the SGW informs the MME and the MME generates corresponding EPS bearer ID that is propagated back to the SGW and PGW.

In an alternative embodiment of the invention, the S5 bearer information in the PGW and SGW is deleted during the REGISTERED-NON-ATTACHED state. This has the advantage that the PGW and SGW do not need to store redundant information for UEs not registered to the 3GPP access network. Essentially this exemplary implementation, is somewhat similar to the conventional DEREGISTERED state for the PGW and SGW in EPS, where the S5 bearer(s) are released and the related context information is deleted. On the first sight there is no disadvantage of deleting the context information (BCE) for the S5 bearers in PGW and SGW, because the SGW needs to send an update to the PGW anyway (for the S5 bearer, e.g. for PMIP this is a Proxy Binding Update (PBU) to the PGW), when the UE returns back to the 3GPP access network and initiates its EPS bearers (re)establishment: For example, the SGW may be triggered by the MME - in response to a (re)attach message being received in the MME - to perform a S5 bearer setup to the PGW and the MME would provide the SGW with the information needed for the S5 bearer establishment. The possible disadvantage of this implementation is that - as will be outlined below in further detail - more complex mechanisms might be needed to allow the update of the EPS bearer context in MME, if the UE is terminating a data flow/starting a new data flow that requires another EPS bearer or PDN connection in the 3GPP access network while the UE is not attached to the 3GPP access network.

### Implications of the REGISTERED-NON-ATTACHED state for the MME

According to one embodiment of the invention, and similar to in the conventional REGISTERED-IDLE state, the Radio Bearers and the S1-U Bearers of the UE are released when the UE enters the REGISTERED-NON-ATTACHED state. Furthermore, there is no NAS signaling connection between UE and MME in this state. The MME may decide to keep the security context of the UE, and maintains the UE's EPS bearer contexts. The security context stored in the MME comprises information about the authentication keys, and in addition the cryptographic keys for integrity protection and encryption derived during the UE's attachment to the 3GPP access network.

In the conventional IDLE state, the MME and SGW store information about the S1 bearer, more specifically the GTP tunnel end-point ID (GTP TEID) that was assigned to by the SGW to the GTP-based S1-U bearer between the SGW and the eNode B, to which the UE was attached before detaching from the 3GPP access network. In the REGISTERED-NON-ATTACHED state, the MME and SGW store the corresponding GTP TEIDs, too, even in case the S5 bearer between the PGW and the SGW is released. Note that in a conventional EPS, if the S5 bearer is released, all EPS bearer related information in SGW and PGW will be deleted. This has the advantage that during the EPS bearer activation, the MME would know the GTP TEID, which it can thus immediately signal to the UE's eNode B for S1-U bearer establishment, before the SGW establishes a S5 bearer with the PGW. In other words, the S1-U bearer establishment can be done in parallel with the S5 bearer establishment, und thus, the time duration for the establishment of the complete EPS bearer can be reduced.

Furthermore, in a more detailed, exemplary implementation, the MME may not expect that the UE periodically performs a tracking area update procedure. Nevertheless, in order to not endlessly store the EPS bearer context information of a UE in the EPS network, the MME may set the timer for periodic TAU procedure to a very long time period, e.g. 12 or 24 hours. Upon expiry of this timer (i.e. the UE has not sent a TAU before the timer expired), the MME will initiate the deletion of the UE's EPS bearer context within the EPS. If only the MME maintains an EPS bearer context information, it can simply delete the information. If for example the SGW also stores EPS bearer context information, the MME may send a signaling message to the SGW to request same to delete the EPS bearer context information. In response to the reception of the signaling message at the SGW, same SGW could for example send a similar message to PGW, if same is maintaining the EPS bearer context information (e.g. BCE), to initiate the deletion of the EPS bearer context information in the PGW as well. The signaling messages to trigger the deletion of the EPS bearer context information in the respective nodes may be acknowledged to report back on the successful deletion of the EPS bearer context information to the node sending the signaling message (e.g. similar to the bearer release procedure described in 3GPP TS 23.401, section 5.4.4).

Another more detailed, exemplary mechanism for deleting the EPS bearer context information maintained in the EPS could be that the MME is informed by some other entity (e.g. HSS) to delete the EPS bearer context. For example, if the UE is still active in a non-3GPP access network, i.e. the UE is registered at the AAA server, there is no need to delete the EPS bearer context. However, when the UE switches off, the UE would be deregistered at the AAA server, the HSS is informed on the deregistration, and in response thereto, the HSS may trigger the MME to delete the EPS bearer context. As in the previous example, the MME may further initiate the deletion of the EPS bearer context information in SGW (and PGW) as appropriate.

### Implications of the REGISTERED-NON-ATTACHED for the User Equipment

Besides the network side, there are also some changes to the behavior possible. Generally, the UE should be aware whether the REGISTERED-NON-ATTACHED state can be used or not (unless it is used by default). If yes, when the UE detaches from the 3GPP access network, e.g. by moving to a non-3GPP access network, in one embodiment of the invention, the UE does not delete the EPS bearer context information for the bearers set up in the 3GPP access network. Please note that the maintenance of the EPS bearer context information is optional, as the UE could also assume that the EPS bearer context information is maintained in the 3GPP access network and could rely thereon. Further the UE stores the security context (i.e. various security keys for integrity protection and encryption) derived when the UE was attached to the 3GPP access network.

When the UE is in REGISTERED-NON-ATTACHED state, the UE may update the stored EPS bearer context, while the UE is not attached to the 3GPP access network. For example, if a PDN connection or data flow, which was handed over from the 3GPP access network to the non-3GPP access network, is terminated while the UE is attached to the non-3GPP access network, the UE should delete the corresponding bearer information in its stored EPS bearer context. In another example, if the UE establishes a new PDN connection while in the non-3GPP access network, the UE should update the stored EPS bearer context in order to include a state for a new default bearer corresponding to the new established PDN connection.

In another example, if a new data flow is initiated for an existing PDN connection while the UE is attached to the non-3GPP access network (e.g. the UE or a correspondent node triggers the new data flow), the UE may determine whether this new data flow would require set-up of a new dedicated bearer for this existing PDN connection in the 3GPP access network. If yes, the UE shall update its stored EPS bearer context in order to include a state for a new dedicated bearer linked to an existing default bearer.

Optionally, the UE may also inform the MME on the new data flow of the PDN connection or the termination of a data flow (i.e. the establishment or deactivation of a corresponding dedicated bearer), so that the MME can update the EPS bearer context for the UE accordingly and may further initiate a pre-establishment of the new dedicated bearer or the deactivation of the dedicated bearer, if applicable.

### PGW-triggered Deactivation of EPS Bearers - Entering REGISTERED-NON-ATTACHED state

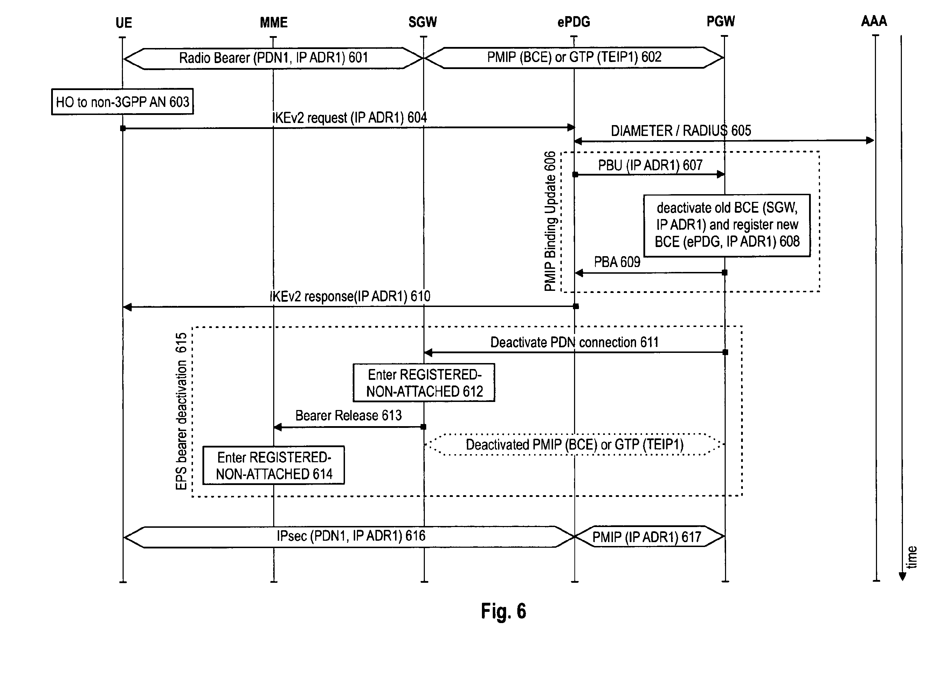

Fig. 6 shows a signaling flow for deactivating a UE's EPS bearer(s) in the 3GPP access network according to an exemplary embodiment of the invention, during the UE being not attached to the 3GPP access network. For exemplary purposes it is assumed that the UE has been initially attached to the 3GPP access and having one active default EPS bearer for PDN connection PDN1 (Radio Bearer (PDN1, IP ADR1) 601 and PMIP (BCE) or GTP (TEIP1) 602). Furthermore, it is assumed that this PDN connection PDN1 is bound to the UE's IP address IP ADR1 in the 3GPP access network, so that according routing information is maintained in the EPS bearer contexts of MME, SGW and PGW. The UE performs 603 a handover (HO) to an un-trusted non-3GPP access network, i.e. the UE connects to an ePDG. When attaching to the untrusted non-3GPP access network, the UE requests the establishment of an IPsec security association using IKEv2 signaling procedures 604 that includes an authentication procedure 605 with the AAA server. The ePDG can use Remote Authentication Dial In User Service (RADIUS) (see IETF RFC 2865, "Remote Authentication Dial In User Service (RADIUS)", available at http://www.ietf.org and incorporated herein by reference) or DIAMETER (see IETF RFC 3588, "Diameter Base Protocol", available at http://www.ietf.org and incorporated herein by reference) protocols to communicate with the AAA server to obtain security related information required for the authentication and the encryption of the data over the IPsec tunnel between the UE and ePDG. Please note that in order to ensure service continuity for PDN connection PDN1, the UE is requesting the use of the same IP address in the non-3GPP access network for the PDN connection PDN1 (this is denoted by IP ADR1 in step 604) that has been used in the 3GPP access network.

Furthermore, the ePDG (acting as the mobility anchor point for the UE) will perform a proxy binding update procedure 606 for the UE as defined in the PMIP protocol. The ePDG sends 607 a proxy binding update (PBU) to the PGW in the 3GPP access network to register the new binding for the UE in the PGW, as the PBU contains the IP address IP ADR1 indicated by the UE in step 604. The PGW registers 608 the new binding cache entry and, instead of updating the previously registered binding (and thus overwriting the previous entry in the BCE), deactivates the UE's BCE pointing to the 3GPP access network that ensured the routing of the packets destined to the UE to the SGW while the UE was attached to the 3GPP access network. Upon successfully registration of the new BCE, the PGW acknowledges the new BCE for UE's IP address IP ADR1 by returning 609 a proxy binding acknowledgement (PBA) to the ePDG, and starts routing IP packets destined to the UE's IP address IP ADR1 to the ePDG. The ePDG acknowledges the successful establishment of the IPsec tunnel to the UE by sending of IKEv2 response message 610 containing the confirmation that the IP address IP ADR1 can be used over this IPsec tunnel. After the successful IPsec tunnel establishment and update of the binding in the PGW, the UE can exchange data of PDN connection PDN1 via the IP sec tunnel to the ePDG (IPsec (PDN1, IP ADR2) 616) and the ePDG forwards the data to/from the PGW (PMIP (IP ADR2) 617).

During the handover, or to be more precise for example in response to the registration of the new BCE as result of the PBU 607 from the ePDG, the PGW initiates an EPS bearer deactivation procedure 615 in the 3GPP access network. Unlike the conventional bearer deactivation procedure, in this procedure the entities in the 3GPP access (MME/SGW/PGW) enter into the REGISTERED-NON-ATTACHED state instead of the DEREGISTERED state, which means that the MME/SGW/PGW do not delete the EPS bearer context information. Usually such states are described only for the MME because the SGW and the PGW just keep an inactive BCE for the UE. The PGW signals 610 a Deactivate PDN Connection message to the SGW of the UE. This message may for example in case of PMIP-based S5 interface be similar to the Proxy Binding Revocation message as specified in the IETF internet Draft by Muhanna et al., "Binding Revocation for IPv6 Mobility", October 2009, draft-ietf-mext-binding-revocation-14.txt, available at http://www.ietf.org and incorporated herein by reference. However the Proxy Binding Revocation message in this internet draft fulfils the function of the Deactivate PDN Connection messages 611 meaning that the Proxy Binding Revocation message contains an indication that the EPS bearer information for the UE should not be deleted. The SGW deactivates its BCE entry for the S5 bearer (note that this could be either a PMIP BCE or a routing entry in the SGW, if GTP is used). The SGW however does not delete this information but only indicates 612 the UE to be in REGISTERED-NON-ATTACHED state, so that the corresponding BCE is not used. Furthermore, the SGW also informs 613 the MME on the deactivation of the S5 bearer by a Bearer Release message indicating to keep the EPS bearer information, which causes the MME to also enter 614 the UE into in REGISTERED-NON-ATTACHED state. However, as noted previously herein, the MME will not delete the EPS bearer context information for the UE. The maintenance of the EPS bearer context information in MME, SGW and PGW while deactivating the respective bindings of the UE for data forwarding is considered as deactivation of the PDN connection PDN1's EPS bearers in the 3GPP access network here.

### Pre-Establishment of EPS Bearers & Update of the EPS Bearer Context

As mentioned earlier, the UE may also keep a track of the new packet data flows or PDN connections initiated in the non-3GPP access network. If the UE is in REGISTERED-NON-ATTACHED state and maintains the EPS bearer context while not connected to the 3GPP access network, the UE may modify its EPS bearer context correspondingly.

In the non-3GPP access network, when new data flows for an existing PDN connection are initiated, the UE may estimate whether the data flow would result in a (new) dedicated bearer in the 3GPP access network. If yes, the UE updates its EPS bearer context by storing the information for a new dedicated EPS bearer. Alternatively or in addition to the update of the EPS bearer context stored in the UE, the UE may optionally also inform the MME in the 3GPP access network on the update to the EPS bearer context, so that the MME may update its maintained context accordingly as well.

Unless the use of the REGISTERED-NON-ATTACHED state is default, both MME and UE should know whether REGISTERED-NON-ATTACHED state is in use. The information whether the MME and the UE are capable or REGISTERED-NON-ATTACHED state could be for example exchanged during the initial attach procedure to the 3GPP access network. If for example the UE does not indicate support of REGISTERED-NON-ATTACHED state, the MME (and SGW) would not activate the REGISTERED-NON-ATTACHED state when the UE hands over to the non-3GPP access system, and will thus set the conventional DEREGISTERED state for the UE, when the UE performs a handover to a non-3GPP access network.

Similar to a conventional EPS system, it may also be assumed here that a trigger for EPS bearer establishment comes either from the network (e.g. from the application function (AF)), or from the UE. If the trigger comes from the AF, the PCRF generates the PCC rule and communicates it to the gateway (e.g. PGW, AGW or ePDG), to which the UE is attached. The gateway initiates the corresponding QoS reservation in the 3GPP access network or non-3GPP access network, respectively, if QoS resource reservation is available in the access technology.

According to one embodiment of the invention, these functions of a conventional EPS system, additional functions specific to the REGISTERED-NON-ATTACHED state are provided to allow the update of the EPS bearer context within 3GPP access network nodes (which could be also referred to as a pre-establishment of an EPS bearer in the 3GPP access network), while the UE is attached to the non-3GPP access network.

In one exemplary embodiment, the update of the EPS bearer context information in the MME of the 3GPP access network (and optionally other nodes, such as PGW or SGW), is realized in that the PCRF is informed about the need of a new EPS bearer in the 3GPP access network and the PCRF initiates an EPS bearer pre-establishment in the 3GPP access network in response thereto.

It is assumed for exemplary purposes that a dynamic PCC is deployed in the non-3GPP access network. In this case, the PGW/AGW/ePDG exchanges information with the PCRF when a new PDN connection is going to be established or when a new packet data flow starts, so that the PCRF is informed about new PDN connections or data flows and may decide if a new EPS bearer in the 3GPP access network is needed. The communication between the PGW/AGW/ePDG and the PCRF is for example carried out via the interfaces Gx, Gxa or Gxb, respectively.

If a static PCC is used (directly provisioned rules into the PCEF or BBERF) or no PCC is deployed in the non-3GPP access network, the PCRF is not informed about the new PDN connection or new packet data flow set up in the non-3GPP access. In this case other ways for exchanging information from the PGW/AGW/ePDG to the PCRF are needed. Several options exist here.

For example, in one implementation, the protocols on the Gx/Gxa/Gxb interface could be extended. If static PCC is used and at least Gx interface is in place (it could be also possible that Gxa or Gxb interfaces are in place), the Gx (Gxa or Gxb) interface can be extended to allow informing the PCRF about the new data flows. For example new attributes for the DIAMETER protocol can be defined.

Another option would be that the PCRF is informed on the need for a new EPS bearer by the AAA server of the UE. For example, when the S2b or S2c interface is used, the AAA server is informed, when a new PDN connection is set up. Hence, if PCC is not used in the non-3GPP access network or if static PCC is used, but no Gx, Gxa or Gxb interface are set up, the AAA server can inform the PCRF about the set up of a data flow or new PDN connection. The AAA server can for example learn the establishment of a new PDN connection in the non-3GPP access during the authentication procedure (e.g. step 605 in Fig. 6). The AAA server learns at least the UE identity and the APN, to which the UE establishes a PDN connection, so the AAA server can inform the PCRF at least this information to the PCRF. The exact format of the signaling between the AAA server and the PCRF is outside the scope of this invention.

Another alternative would be that the PGW is informing the PCRF on the need of a new EPS bearer. If PCC is not used in the non-3GPP access network or if static PCC is used, but no Gx, Gxa or Gxb interface are set up, the PGW can inform the PCRF about the initiated new packet data flows between the UE and other correspondent nodes. The PGW should be capable to detect the initiation of the new packet data flows. It is possible that there is a direct signaling connection between the UE and PGW, e.g. when DSMIPv6 (also known as S2c interface) is used, while the UE is located in the non-3GPP access network, so that the UE can inform the PGW about the QoS requirements for the new packet data flow. The exact format of the signaling between the PGW and the PCRF is outside the scope of this invention.

For all options above, the information conveyed to the PCRF can include the APN of the affected PDN connection and various traffic parameters, e.g. IP 5-tuple parameters (Source Address, Destination Address, source/destination port, protocol ID), data rate, delay requirements, if available.

Once the PCRF is informed on the need of a new EPS bearer, it can be also assumed that the PCRF is aware that the UE is attached to a non-3GPP access network, and PCRF performs all necessary actions in the 3GPP access network to pre-establish the EPS bearer (thereby updating the EPS bearer context information of the UE).

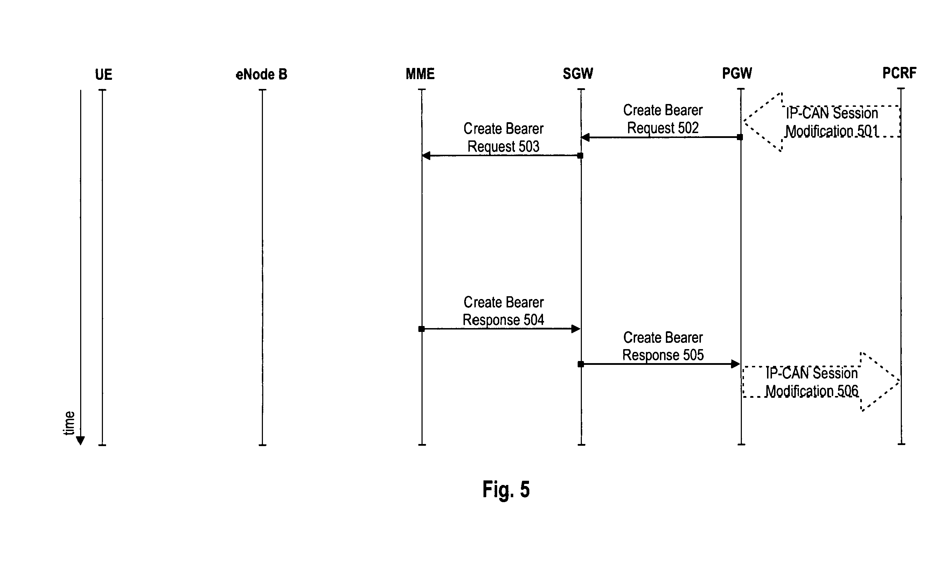

For pre-establishment of the EPS bearer, the procedures for EPS bearer activation or modification are described in 3GPP TS 23.401, section 5.4. However, since only a pre-establishment of EPS bearer is needed, steps 4 to 8 from Figure 5.4.1-1 in 3GPP TS 23.401 are not performed, except for the Session Management Request, as same would establish the radio bearer resources. Note that the procedures for EPS bearer activation and modification in 3GPP TS 23.401 are for a GTP-based S5 interface, whereas the procedures for a PMIP-based S5 interface are described in 3GPP TS 23.402, section 5.4, which is slightly different from the procedure for the GTP-based S5 interface regarding the messages exchanged on the S5 interface, while the procedures on the S1 and S11 interfaces correspond to the procedure as shown in 3GPP TS 23.401, section 5.4 (again without performing steps 4 to 8, except for the Session Management Request).

In Fig. 5 a signaling procedure for the EPS bearer pre-configuration according to an exemplary embodiment of the invention is shown that reuses a modified EPS bearer activation or modification procedures as described above are shown for the cases of using GTP on the S5 interface. In this procedure, the PCRF sends 501 a PCC decision provision (QoS policy) message to the PGW if a dynamic PCC is deployed. Essentially, this step corresponds to the initial steps of the PCRF-Initiated IP-CAN Session Modification procedure or to the PCRF response in the PCEF initiated IP-CAN Session Modification procedure, up to the point that the PDN GW requests IP-CAN Bearer Signalling. If there is no dynamic PCC, the PGW will apply the local QoS policy. Next, the PGW uses this QoS policy to assign the EPS Bearer QoS. This means that the PGW will decide and assign the values to the bearer level QoS parameters, such as QCI (QoS Class Indentifier), ARP (Allocation and Retention Priority), GBR (Guaranteed Bit Rate) and MBR (Maximum Bit Rate). The PDN GW sends 502 a Create Bearer Request message (inter alia containing the IMSI of the UE, the Linked EPS Bearer Identity (LBI), the EPS Bearer QoS, a TFT, S5/S8 TEID (GTP Tunnel Endpoint ID), etc.) to the SGW. Please note the LBI is the EPS Bearer ID of the default bearer. If there is no default EPS bearer, e.g. because a new PDN connection in the non-3GPP access network was established, the APN can be included in the LBI field instead of the EPS Bearer ID of the default bearer. The SGW sends the Create Bearer Request message (including inter alia the IMSI, EPS Bearer QoS, TFT, S1-TEID, LBI, etc.) to the MME.

Based on the IMSI, the MME detects that it already maintains EPS bearer context information for the UE: In response to the Create Bearer Request message, the MME selects an EPS Bearer Identity, which has not yet been assigned to the UE. As indicated previously, in order to assure keeping the synchronization between the MME EPS Bearer context information and the corresponding information in the UE, MME and UE may select the EPS Bearer Identity based on the same algorithm/function. The MME updates the EPS bearer context information for the UE so as to account for the new EPS bearer.

The MME acknowledges 504 the bearer activation to the SGW by sending a Create Bearer Response message including the EPS Bearer Identity, and the S1-TEID. The SGW in turn acknowledges 505 the bearer activation to the PGW by sending a Create Bearer Response message including the EPS Bearer Identity, and the S5/S8-TEID. If the dedicated bearer activation procedure was triggered by a PCC Decision Provision message from the PCRF, the PGW indicates 506 to the PCRF whether the requested PCC decision (QoS policy) could be enforced or not, allowing the completion of the PCRF-Initiated IP-CAN Session Modification procedure or the PCEF initiated IP-CAN Session Modification procedure, after the completion of IP-CAN bearer signaling.

Please note that in case PMIP is used on the S5 interface, the procedure for preconfiguring an EPS bearer is similar to the one described above except for steps 501, 502, 505 and 506. Instead, the PCRF entity initiates IP-CAN Session Modification 501 to the SGW. The IP-CAN Session Modification message 501 may contain among other things the QoS policy, the LBI, the APN, the IP version type (IPv4 or IPv6) and optionally the PGW Identity to which the UE is connected in the non-3GPP access network. Then the signaling procedure between the SGW and MME is the same as described above including the steps 503 and 504.

When the MME receives a trigger from the SGW, e.g. the Create Bearer Request 503 as shown in Fig. 5, the MME generates/updates the states for the UE's PDN connections and bearer context. If the performed procedure is a pre-establishment of a dedicated bearer, the LBI contains the default EPS bearer ID. If the bearer pre-establishment is for a default bearer (e.g. a new PDN connection in the non-3GPP access network was established), the LBI may contain the APN of the PDN connection that was established in the non-3GPP access. Alternatively, the APN of the PDN connection, for which the bearer is to be pre-established, could be contained in a separate field in the Create Bearer Request 503 message. The Create Bearer Request 503 from the SGW may also contain the IP version type (IPv4 or IPv6) and optionally the PGW Identity to which the UE is connected in the non-3GPP access network.

If the PGW Identity is not included in the trigger message from the SGW, the MME may acquire the PGW Identity from the HSS using the APN, since the HSS always has the mapping between the APN and the associated PGW Identity. If a new EPS bearer is to be pre-established in the 3GPP access network, the MME generates a new EPS bearer ID, stores the IP version type of the data bearer (IPv4 or IPv6), the APN and the PGW identity, the QoS policy and informs the SGW about the EPS bearer ID and the IP version type, for example in the Create Bearer Response. The SGW may in turn also inform the PGW (i.e. the PDN GW) on the EPS bearer ID, for example within the Create Session Request sent from SGW to PGW. Depending whether the S5 interface is PMIP-based or GTP-based, either the SGW or the PGW update the PCRF with the new EPS bearer ID and status information.

In one further advanced implementation, the UE may also be informed on the EPS bearer ID corresponding to the new PDN connection or new packet data flow in the non-3GPP access network. In case of new PDN connection establishment, the AAA server and the UE exchange signaling. One of the involved signaling message could be extended to comprise the EPS bearer ID corresponding to the new PDN connection or new packet data flow in the non-3GPP access network so as to inform the UE.

Basically, it would be advantageous that the UE is informed on the EPS bearer ID for the correct performance of the tracking area update or service request procedure, e.g. when the UE is reattaching to the 3GPP access network. However, it may not be always possible to inform the UE about the EPS bearer ID generated in the MME. Therefore, alternative options will be discussed in the following in connection with the re-attachment of the UE to the 3GPP access network, as the EPS bearer context information available to the UE also effects the information the UE can communicate in the (re-)attach message sent to the MME.

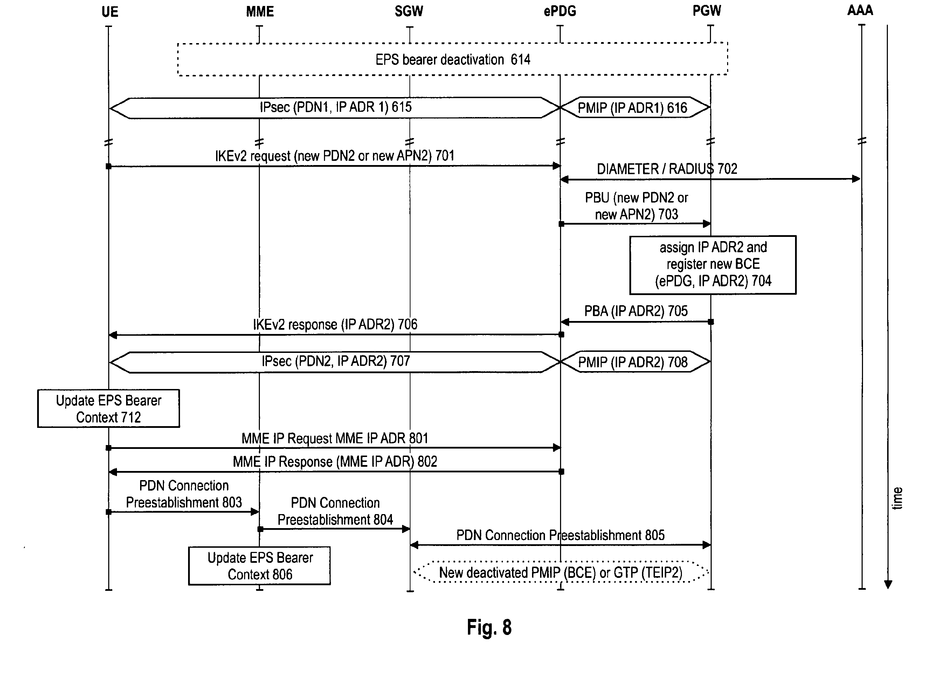

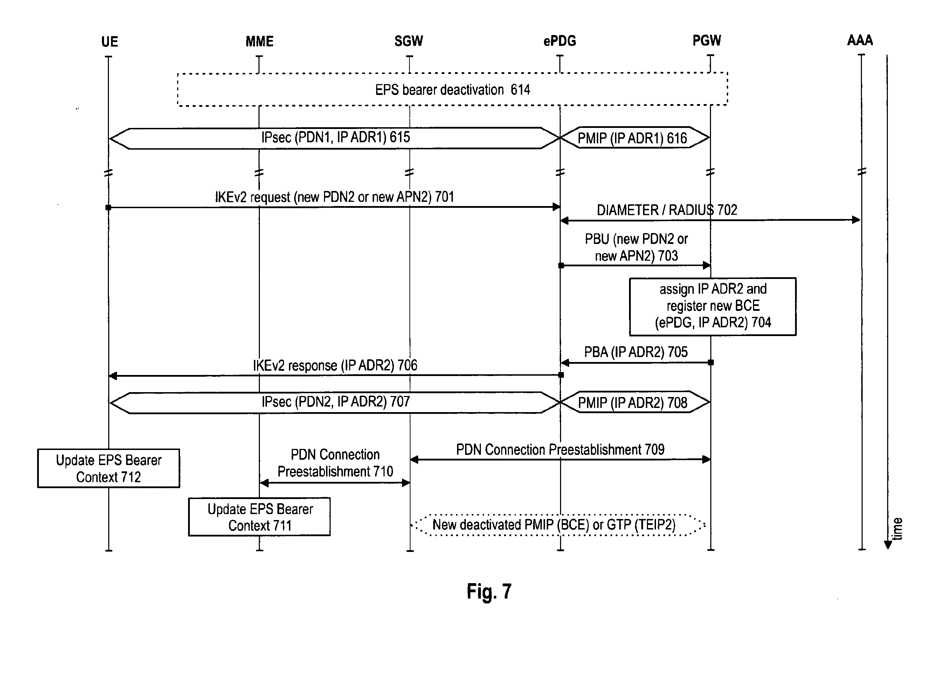

Fig. 7 and Fig. 8 show two exemplary alternative signaling flows according to exemplary embodiments of the invention that allow the update of the bearer context in the MME when the UE establishes a new PDN connection (PDN2) in the non-3GPP access. Please note that the signaling flows only exemplarily indicate the last steps of Fig. 6 to indicate their relation to the deactivation of PDN connection PDN1 within the 3GPP access network.

In Fig 7 and Fig. 8, it is assumed that the UE initiates the establishment of a new PDN connection PDN2. Accordingly, the UE requires a new IP address (IP ADR2) for the new PDN connection PDN2. To indicate that it wants to start a new PDN connection, the UE sends 701 a request message (IKEv2 request) to the ePDG that indicates the new PDN connection PDN2, e.g. by means of its access point name APN2. As a next step the ePDG authorizes and authenticates the UE. For this purpose the ePDG acts as an authenticator and exchanges RADUIS or DIAMETER protocol messages with the AAA server 705 as defined in RFC 2865, respectively RFC 3588.

Furthermore, as the ePDG is providing the MAG functionality according to the PMIP protocol, the ePDG registers in step 703 a further binding at the PGW (that is implementing the LMA functionality of PMIP) by means of sending a PBU, to ensure proper forwarding of IP packets destined to the UE's new IP address IP ADR2 for the new PDN connection. The PBU indicates at least the new PDN connection PDN2 or its APN (APN2) together with the UE identity to the PGW. The PGW assigns a new IP address (prefix) IP ADR2 to the UE for this new PDN connection and registers 704 a new BCE in its binding cache and acknowledges 705 the new successful binding cache update. This acknowledgement provides the ePDG with the newly assigned IP address (prefix) IP ADR2 for the UE. After the ePDG has authenticated the UE with the AAA server and has confirmed the IP address configuration with the PGW, the ePDG completes the IKEv2 Security Association establishment with the UE providing the new IP address IP ADR2 and other security and authentication information to the UE as shown in the IKEv2 response message step 706. The UE obtains the new IP address prefix (in case of IPv6) or a new IP address (in case of IPv4) from the ePDG and sets up a corresponding security association between UE and ePDG for the new PDN connection PDN2, as it is shown in step 707. Respectively, the new IP address configuration, i.e. the new IPv6 prefix or the IPv4 address is denoted as IP ADR2 in the steps 704, 705, 707 and 708.

As indicated in Fig. 7 and Fig. 8, the UE may subsequently communicate data of PDN connection PDN2 via the IP sec tunnel to ePDG (IPsec (PDN2, IP ADR2) 707, and the ePDG relays the data via the corresponding PMIP tunnel to the PGW (PMIP (IP ADR2) 708).

After the new PDN connection PDN2 has been successfully established, the UE updates 712 its EPC bearer context to account for the newly established PDN connection PDN2 (and the corresponding default and optional dedicated bearers) that would be required in the 3GPP access network.

In the example of Fig. 7, the PGW recognizes the establishment of the new PDN connection by the UE based on the registration of the new BCE for the UE (see steps 703 to 705). The PGW can establish a logical link between BCE for PDN1 and PDN2 because both are related to the same UE. Usually the UE is identified at the PGW by the UE identifier, e.g. the IMSI.

From the information of the old BCE from the 3GPP access network, the PGW may obtain the address of the SGW, to which the UE was attached. Based on this information, the PGW may decide to inform 709 the SGW on the establishment of a new PDN connection PDN2 for the UE. Similar to the description of Fig. 5 above, the SGW obtains information from the PGW in step 709 about the respective UE identity, the new APN, PGW identity, IP version type (IPv4 or IPv6), QoS policy information etc. The SGW may inform 710 in turn the MME about the new PDN connection PDN2 and about the respective details of the PDN2. In this way the MME and SGW may pre-establish an EPS bearer for PDN connection PDN2, i.e. update the available EPC bearer context information of the UE to account for the new PDN connection. The MME may generate EPS bearer ID and inform the SGW about it in step 710. Please note that due to the UE being in REGISTERED-NON-ATTACHED state (see for example Fig. 6), the respective EPS bearer context information is marked accordingly, i.e. is indicated inactive.

In the example shown in Fig. 8, the UE is initiating the update of the EPS bearer context information on the 3GPP access network nodes, i.e. the pre-establishment of EPS bearer(s) to account for the new PDN connection PDN2. If the IP address of the MME should not be available to the UE, the UE requests 801 the MME's IP address from the ePDG. The ePDG resolves the MME's IP address, and signals 802 the MME's IP address back to the UE. Alternatively, the UE could derive the MME ID based on Globally Unique Temporary Identity (GUTI) used in the 3GPP access network for identifying the MME and may then derive the MME's IP address by means of a DNS query for the MME ID.

The UE sends 803 an IP-based message to the MME directly for requesting the MME to update the EPS bearer context in the MME with the new PDN connection PDN2. The message content can be integrity protected, using the keys of the security association derived in the 3GPP access network for NAS signaling, so that the MME can verify the source of the message, i.e. the UE. This verification of the message 803 in the MME is possible because the MME is in REGISTERED-NON-ATTACHED state and stores the security context derived when the UE was attached to the 3GPP access network. The information contained in the message 803 could be e.g. APN of the new PDN connection, IPv4/v6 version type, the new IPv6 prefix or IPv4 address (if a new PDN connection was established in the non-3GPP access network), QoS policy information if available, optionally the EPS bearer ID generated internally in the UE for that new bearer, etc. After the verification process is successful, the MME may update 806 the EPS bearer context of the UE to account for the new PDN connection PDN2, i.e. preestablishes a new EPS bearer(s) for the new PDN connection PDN2. Furthermore, the MME may optionally also inform 804 the SGW on the new PDN connection, so that the SGW can update the EPS bearer context for the UE accordingly. Similarly, the SGW may further inform 805 the PGW on the new pre-established EPS bearer (including the EPS bearer ID generated by the MME or accepted by the MME, if it was signaled by the UE). Please note that the SGW may also inform the PGW about a corresponding deactivation of a dedicated EPS bearer that was stored in the inactive BCE. The SGW does not need to inform the PGW about the deactivation of a default EPS bearer because the deactivation of a default bearer means that a PDN connection was released in the non-3GPP access, but the PGW always learns about the released PDN connection via the non-3GPP access from the ePDG/AGW.

If a new data flow to an existing PDN connection is initiated in the non-3GPP access network and no PCC functionality is deployed (in contrast to the new PDN connection establishment), only the UE can decide whether the new data flow would result in a new dedicated EPS bearer in the 3GPP access network. The PGW cannot always detect the resulting dedicated bearer because, as the PGW may not have the required UE's QoS policy and subscription information available. In these cases, the procedure explained in Fig. 8 has an advantage compared to the procedure described in Fig. 7.

In general, when a dedicated EPS bearer is pre-established in the 3GPP access network resulting from a new data flow via an existing PDN connection in the non-3GPP access network, the MME should be informed at least about the default bearer to which the dedicated bearer is linked. Additionally to the default bearer ID, the MME has to know the QoS information of the data flow, since it is used by the MME to generate the according traffic filters (TFT) for the data flow. If the EPS bearer ID for the default bearer is not available, the APN can be used as default bearer ID, as the default and the dedicated bearer have the same APN. Furthermore, in case of the pre-establishment of dedicated EPS bearer, there is no need to inform the MME about the PGW identity and the IP version type, since they are the same for the dedicated bearer as for the default bearer.

### Re-Attachment of the UE to the 3GPP Access Network

When the UE is in REGISTERED-NON-ATTACHED state and reattaches to the 3GPP access network, the UE may activate the EPS bearer(s) within the 3GPP access network by means of a (re-)attach message as described earlier herein. The activation of the EPS bearers in the 3GPP access network may be considered as a part of the procedure when the UE transits from the REGISTERED-NON-ATTACHED state to the REGISTERED-CONNECTED state again.

Generally, the (re-)attach message should be the first message that is sent to the MME when the UE (re-)Attaches to the 3GPP access network. For example, the (re-)attach message could be a Service Request or tracking area update (TAU) with the active flag set. Hence, when the UE for example hands over from the non-3GPP access network to the 3GPP access network, instead of performing a time-consuming handover attach procedure as commonly defined in the 3GPP standards, the UE immediately initiates a service request procedure or by TAU request with the active flag set to trigger the immediate (re-)establishment of the data bearers.

There are different options how the (re-)attach message could be designed in terms of its format and content. Furthermore, it should also be taken into account that the EPS bearer context information in the 3GPP access network (in particular that of the MME) and the UE (if the UE maintains a EPS bearer context) may not necessarily synchronized at the time the UE re-attaches to the 3GPP access network. For example, as mentioned previously, for the new PDN connections or data flows established in the non-3GPP access network, the UE may not know the assigned EPS bearer ID in the 3GPP access network, because the non-3GPP access network architecture does not allow for signaling such information to the UE.

It should be further noted that in some embodiments of the invention if the UE's PDN connections and the data flows in the non-3GPP access network does not change, there is no update of the EPS bearer context in the 3GPP access network and the UE, while the UE is attached to the non-3GPP access network. Hence, in these cases when the UE returns back to the 3GPP access the context information within 3GPP access network and UE are still synchronized. This means though that the MME may only trigger the immediate reestablishment for those EPS bearers that have been established prior to the UE moving from the 3GPP access network to another access network. However, if the UE has set up further data flows or PDN connections when attached to a non-3GPP access network prior to reattaching to the 3GPP access network, the UE would need to perform the conventional procedures to set up corresponding EPS bearers in the 3GPP access network. The attachment of the UE to the 3GPP access network is at least speed up with respect to the EPS bearers comprised within the maintained EPC bearer context information.

To resolve the problem of de-synchronization of context information, it would be desirable, the procedure performed by the UE when re-attaching to the 3GPP access network also allows for synchronization of the EPS bearer context of UE and MME, e.g. with respect to the EPS bearer IDs in the MME and UE.

Considering the problem of de-synchronization of context information, one embodiment of the invention proposes a solution to this problem by the UE relying on the data bearer context information available in the 3GPP access network, and in particular in the MME. This means that the UE may itself not maintain data bearer context information when detaching from the 3GPP access network.

Upon reattachment of the UE to the 3GPP access network, all bearers for which the MME stores data bearer context information would be reestablished. In one exemplary implementation, the UE does not include any information about the bearer status (i.e. no inclusion of EPS bearer ID(s)) in the re-attach message sent to the MME. As the (re)attach message contains at least one UE identifier, the MME can recognize based on its context information which UE is (re)attaching and that this UE is in REGISTERED-NON-ATTACHED state. Since there is data bearer context information available in the MME, the MME triggers the (re-)establishment of the EPS bearers of the UE. Note that in the legacy 3GPP system (Release 8), the MME would establish only the default bearer of the APN included in the (re)attach message. Thus, the MME's behavior is modified for the REGISTERED-NON-ATTACHED state, so that the MME sets up those EPS bearers for which the MME has bearer context. The MME may further include information on the bearer status in a response to the (re-)attach message, e.g. in the TAU accept message or service accept message sent to the UE, so that the UE learns which EPS data bearers have been activated and the UE can therefore "synchronize" its data bearer context information with same of the MME. In addition to a synchronization of the EPS bearer IDs, the synchronization may include the MME signaling QoS information, traffic flow template (TFT) and/or LBI to the UE.

Another implementation according to a further embodiment of the invention, that is resolving the problem of de-synchronization, foresees that the UE indicates that all data bearers are to be activated in the 3GPP access network within the (re-)attach message. For example, if the (re-)attach message is implemented as TAU or service request message, the UE indicates that all EPS bearers are active, even though not all of them may be indeed active.

Note that this is quite similar to the above case where the UE does not include bearer status information at all. In this example, the (re-)attach message explicitly indicates that the MME should activate data bearers, while in the previous example, the MME autonomously acts in response to the (re-)attach message and activates all bearers. In the present implementation, the UE does not know the EPS bearers that will be activated, i.e. for which the MME maintains a data bearer context, but simply tells to the MME that all data bearers are active. The MME would activate only those EPS bearers for which it maintains a data bearer context. Upon reestablishing the data bearers, the MME will then signal to the UE which EPS bearers have been activated together with the corresponding QoS parameters as described in the alternative embodiment outlined above.

A potential drawback of the UE relying on the bearer context information stored within the MME is that if the data bearer context in the MME is not up-to-date, the MME may set up the wrong or not enough data bearer(s). For example, the MME could either set up EPS bearers that are not needed anymore and/or not a set up EPS bearers for applications active in the UE. If mechanisms are provided to update the data bearer context information in the MME (and other 3GPP access network nodes, depending on the implementation) even if the UE is not attached to the 3GPP access network, e.g. when attached to a non-3GPP access network, however, it can be assumed that in almost all cases the data bearer context information 3GPP access network in the 3GPP access network will be accurate.

In further embodiments, the UE may not rely on the context information available to the 3GPP access network. For example, in another embodiment of the invention, when the UE is setting up an additional PDN connection or data flow in the non-3GPP access, the UE generates a Bearer ID (namely "base ID") for the new EPS bearer for this connection/flow out of a preconfigured identifier range. In one example, the there may be 11 available EPS bearer IDs. The EPS bearer ID may be for example represented by 4 bits, i.e. the maximum number of possible values would be 16. However, the values [0-4] may be reserved, so that the values [5-15], i.e. 11 values, can be assigned as EPS Bearer IDs. Accordingly, the UE updates its EPS bearer context information to indicate the generated EPS Bearer ID for the new PDN connection/data flow.

There are different possibilities how the UE can generate an EPS bearer ID. One example would be that the UE assigns the lowest available identifier value available as a new EPS Bearer ID, i.e. the UE chooses the lowest value that is not in use for identification of anther data flow. Furthermore, the MME may also use the same mechanism to assign an EPS Bearer ID. Hence, if there is a mechanism for updating the EPS bearer context in the MME (and other 3GPP access nodes) while the UE is not attached to the 3GPP access network, upon pre-establishment of an EPS bearer in the 3GPP access network, MME and UE should assign the same EPS Bearer ID to the new data flow/PDN connections so that the contexts in MME and UE keep synchronized, as outlined in further detail below.

In an alternative implementation, the UE could also use hash functions to generate the EPS Bearer ID. For example, the identifier could be determined as the result of a hash function of the access point name (APN) of the new PDN connection and the IPv4 address or IPv6 prefix configured for the new PDN connection. Again, synchronization of the EPS Bearer ID in the MME and in the UE can be maintained if both the MME and the UE use the same hash function for generating its EPS Bearer IDs.

In one further advanced implementation, an update mechanism for the EPS bearer context maintained in the 3GPP access network is implemented. In one embodiment, after the UE has generated the EPS Bearer ID, the UE informs the PGW on the EPS Bearer ID, given that there are means available to signal this identifier to the PGW. The PGW initiates an EPS bearer pre-establishment in the 3GPP access network for the new PDN connection as described previously. This procedure may be performed after completing or in parallel with the procedure in the non-3GPP access network.

In another embodiment of the invention, the UE indicates either:
- the new APN (for the new PDN connections established in the non-3GPP access network) and the total number of EPS bearers (optionally a default/dedicated flag may be included) per this new APN, or
- the new APN (for the PDN connections established in the non-3GPP access network) and the total number of EPS bearers (optionally a default/dedicated flag may be included) per this new APN, and the EPS Bearer IDs for those EPS bearers that have been established prior to the UE detaching from the 3GPP access network, or
- the APN of all PDN connections (i.e. for the still active PDN connections established in the 3GPP access network and the newly established PDN connections in the non-3GPP access network), and the total number of EPS bearers (optionally a default/dedicated flag may be included) for each of the APNs,
in the (re-)attach message sent by the UE to the MME when attaching to the 3GPP access network.

In the above example, if the UE indicates just one bearer for a new given APN, this means that the UE has just a default bearer for the corresponding PDN connection to the given APN. If the UE indicates two bearers for a new given APN, this means that the UE has one default and one dedicated bearer for the PDN connections. Optionally the UE may indicate whether the EPS bearer for a given APN is a default or dedicated one, e.g. the UE may use a special default or dedicated flag. It is less probable that the UE has multiple dedicated bearers for one APN, but if this is the case the UE can enumerate the dedicated bearers based on when they were established, e.g. the older bearers would get a lower identifier value and the newer bearers would get a higher identifier value according to the point in time the PDN connection/data flow is started.

The MME maps the requested active bearers indicated from the UE to the data bearers of the data bearer context information (and, if no pre-configuration of EPS bearers is used, the MME establishes the PDN connection (and its EPS bearer(s)) for the new APN(s) indicated from the UE in the (re-)attach message). Furthermore, for preconfigured or data bearers the MME triggers their activation in the 3GPP access network. Subsequently, the MME may indicate in a response message to the (re-)attach message (e.g. a TAU accept message or service accept message) the EPS bearer IDs at least for the activated data bearers that have been newly established, respectively for which only an APN has been received, so that the UE can assign the EPS bearer IDs to the data bearers according to its maintained EPS context information.

In a further alternative embodiment of the invention, the UE indicates the APN(s) for the PDN connections established in the non-3GPP access and the corresponding EPS bearers with the QoS parameters for the new bearers for that the MME does not have a data bearer context. In other words, the UE sends a kind of combined TAU/service request for existing data bearer(s) and a service request for a new bearer. The MME reestablishes the EPS bearers, for which the MME has maintained bearer context information. For the new data bearers, which the UE has established while not attached to the 3GPP access network and as indicated by the new APN(s), the MME has no bearer context information. Accordingly, the MME initiates the establishment of new EPS bearers.

This implementation can be for example employed in a scenario where the UE established a new PDN connection in the non-3GPP access and the initiated data flows would map to a default EPS bearer. In this case the UE does not need to signal any QoS parameters, but merely either the new APN (if the new PDN connection has a new APN) or the APN name and an indication for a new PDN connection. In such a case, the MME initiates the setup of a new PDN connection with the corresponding default EPS bearer.

In the above solution examples it can be seen, that when the UE establishes a new PDN connection in the non-3GPP access, both the UE and the access network (e.g. PGW) know that the new PDN connections results in a new default EPS bearer in the 3GPP access network. Thus, the UE and the PGW/PCRF can take the corresponding actions as described above. However, the case, when a new packet data flow is initiated in the non-3G access network, is more complicated, especially when no PCC functionality is deployed in the non-3GPP access network. Note also that dynamic PCC functionality is optional even in the 3GPP access network, i.e. in the PGW/SGW the QoS policies may be locally configured and either the PCRF is not deployed or no interaction between the PGW/SGW and the PCRF happens.

In these cases the UE and the PGW can only judge whether the new packet data flow for an existing PDN connection in the non-3GPP access network would correspond to a new dedicated EPS bearer in the 3GPP access network. The situation is even more complicated if there is no signaling means between the PGW and the UE in the non-3GPP access network to communicate such information about newly established or terminated EPS bearer(s). Assuming the provisioning of a static PCC, the PGW/SGW may be assumed pre-configured with the QoS policy and may take a decision based on that policy. If a PMIP-based S5 interface is used in the 3GPP access network, the QoS policy is configured in the SGW, which does not participate in the data traffic forwarding when the UE is in the non-3GPP access network.

In another embodiment of the invention, in order to allow an update of the EPS bearer context information within the 3GPP access network even in cases where no PCC is provisioned, the PGW (which is always on the data path of the UE) indicates to the SGW that the UE has established a new packet data flow (or PDN connection) and the corresponding traffic characteristics, e.g. QoS parameters. The SGW is communicating this information further to the MME which is updating the EPS bearer context for the UE accordingly to account for the new packet data flow (or PDN connection).

Furthermore, the UE may be pre-configured with QoS policy for the 3GPP access network. Advantageously, this pre-configured QoS policy should be the same as the one configured in the PGW/SGW (if static QoS policy, also referred to as a static PCC herein, is deployed) or in the PCRF (if dynamic QoS policy, also referred to as dynamic PCC herein, is deployed). The configuration of the same QoS policies in the UE and the 3GPP access network ensure that the UE when deciding on whether a new packet data flow results in a new EPS bearer in the 3GPP access network come to the same decision as if the network would decide on this issue. Please note that in the current 3GPP specifications the PGW (in case of GTP-based S5 interface) and SGW (in case of PMIP-based S5 interface), more specifically the PCEF or BBERF function in PGW and SGW respectively, take the decision about the mapping of data flow to an EPS bearer.

When applying above described concepts of the REGISTERED-NON-ATTACHED state, situations or implementations may exist where the UE is not aware of whether the 3GPP access nodes, and in particular the MME still maintain EPS context information for the UE, i.e. have the UE still in REGISTERED-NON-ATTACHED state. When the UE moves back to the 3GPP access network, it would be therefore desirable for the UE that it can verify that the MME is still maintaining EPS bearer information for the UE in REGISTERED-NON-ATTACHED state. If the UE's state in the MME and/or SGW is DEREGISTERED, then the UE performs the conventional handover attach procedure. If the state in the MME and/or SGW is in REGISTERED-NON-ATTACHED state, the UE performs the re-attach procedure according to one of the various embodiments described herein.

In one further exemplary embodiment, the UE can prove the state within the MME indirectly by checking the availability of inactive BCE in the PGW. This is valid for the case that the PGW stores the old BCE in the 3GPP access network, i.e. the S5 interface is set in inactive state. The UE discovers the PGW's IP address via the Domain Name System (DNS) and sends a "test" message to the PGW to check whether an inactive BCE is still available.

One possible problem in this mechanism is that the UE may discover the wrong PGW via DNS. Another problem could be that the UE needs to trust the PGW. To overcome these problems, in a more advanced implementation the MME inserts a key (*K*_{NASINT} or K_{ASME}) in the PCO IE to the PGW during the (initial) 3GPP attach procedure. The PGW uses the key to verify the "test" message sent by the UE to ask about the availability of inactive BCE. The PGW uses the same key to sign the reply to the "test" message. When the UE receives the signed reply from the PGW, the UE can verify if the PGW is the correct one and can trust the reply.

Another solution for proving whether the REGISTERED-NON-ATTACHED state is active in the MME is that the UE queries the MME state via the MAG/authenticator (i.e. ePDG/AGW) in the non-3GPP access. The UE needs to tell to the ePDG/AGW the MME ID. The UE may for example derive the MME ID based on Globally Unique Temporary Identity (GUTI) used in the 3GPP access network. Based on the MME ID, the ePDG/AGW can resolve the MME's IP address by performing DNS (using operator's internal DNS server). The ePDG/AGW forwards the request sent by the UE to the MME or alternatively, the ePDG/AGW tells the MME's IP address to the UE.

In the latter case, the UE sends the request message to verify the state of the UE to the MME directly. As mentioned previously, the UE can signed (integrity protect) the request message by the key *K*_{NASINT}. The MME verifies whether it can trust the received request message by verifying the signature of the message. Using the method of signing the request message, there is no need of trust relationship between MME and ePDG/AGW.

Please note that this mechanism enabling direct signaling between the UE (in the non-3GPP access network) and the MME described in the previous paragraphs can also be used as an alternative solution for communication between the UE and MME for exchanging information about new PDN connections/packet data flows in the non-3GPP access. Hence, the UE can inform the MME about the changes of the PDN connections and packet data flows, so that the EPS bearer context in the UE and MME can be synchronized as outlined before (see also Fig. 8).

Another alternative solution for pre-establishing an EPS bearer context in the MME and SGW could be based on involving the AAA server. The AAA server in the non-3G access informs the HSS about the changes of the active PDN connections. This is possible because for every new PDN connection or deletion of PDN connection the ePDG/AGW informs the AAA server. Then, the HSS may inform the MME on the change in the UE's PDN connections and the MME can update the EPS bearer context accordingly. One potential undesirable effect of this alternative solution may be that it can cause increased signaling load to/from the HSS. To overcome this problem, a direct signaling between AAA server and MME could be defined and used.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for (re)attaching a user equipment to a 3GPP access network, the method comprising:
transmitting from the user equipment via the 3GPP access network a (re)attach message to a mobility management entity within the 3GPP access network, wherein the (re)attach message requests the activation of data bearers of the user equipment for communication in the 3GPP access network and is indicating to the mobility management entity that context information on the data bearers is available to the mobility management entity, and
triggering by the mobility management entity and in response to the (re)attach message the activation of the data bearers based on the data bearer context information maintained by the mobility management entity.

2. The method according to claim 1, wherein the data bearer context information is available to the mobility management entity from a previous attachment of the user equipment to the 3GPP access network.

3. The method according to one of claims 1 or 2, wherein the (re)attach message is the first message transmitted by the user equipment via the 3GPP access network to the mobility management entity upon (re)attaching thereto.

4. The method according to one of claims 1 to 4, wherein the activation of the data bearers includes:
- the activation of a radio bearer for data transport between the user equipment and a eNode B serving the user equipment upon (re)attaching to the 3GPP access network, and/or
- the activation of a data tunnel between a serving gateway of the 3GPP access network and the eNode B for forwarding data of the user equipment, and/or
- the activation of a data tunnel between the serving gateway and a packet data gateway of the 3GPP access network for forwarding data of the user equipment, or the activation of a binding cache entry at the packet data gateway for forwarding data of the user equipment.

5. The method according to one of claims 1 to 4, wherein the (re)attach message is indicating:
- bearer identities of the data bearers to be activated, or
- the PDN connection identifiers and the number of data bearers per PDN connection, or
- a field or flag indicating to the mobility management entity that data bearer context information is available at the mobility management entity.

6. The method according to one of claims 1 to 5, wherein the (re)attach message is:
- a tracking area update message, in which the active flag is set or
- an extended tracking area update message including data bearer information for the data bearers to be established or
- an extended service request message including data bearer information for the data bearers to be established.

7. A method for storing bearer context information of a user equipment upon handover from a 3GPP access network to a non-3GPP access network, the method comprising:
in response to the user equipment moving to the non-3GPP access network, releasing resources of data bearers of the user equipment within the 3GPP access network, and maintaining by a mobility management entity of the 3GPP access network serving the user equipment bearer context information of the released data bearers.

8. The method according to claim 7, further comprising the step of maintaining data bearer context information for the data bearers by a packet data gateway connected to the mobility management entity.

9. The method according to claim 7 or 8, further comprising the steps of:
receiving at the mobility management entity a signaling message indicating the establishment of a new data bearer for the user equipment, while the user equipment is not attached to the 3GPP access network, and
generating and storing data bearer context information for the new data bearer by the mobility management entity.

10. The method according to one of claims 7 to 9, further comprising the steps of the method according to one of claims 1 to 6.

11. The method according to one of claims 1 to 10, wherein the maintained data bearer context information comprises information on a serving gateway of the 3GPP access network and on the serving gateway's GTP tunnel endpoint identifier of the GTP tunnel to a eNode B that was serving the user equipment in the 3GPP access network prior to handing over to a non-3GPP access network.

12. The method according to one of claims 1 to 11, further comprising the steps of:
receiving at the mobility management entity and/or a packet data gateway connected to the mobility management entity a signaling message requesting the deletion of the bearer context information of the user equipment, and
deleting the bearer context information of the user equipment in response to the signaling message while the user equipment is not attached to the 3GPP access network.

13. A user equipment for use in a 3GPP access network, the user equipment comprising:
a storage unit for storing data bearer context information of data bearers of the user equipment in the 3GPP access network,
a communication unit including a transmitter for transmitting, in response to the user equipment attaching to the 3GPP access network, a (re)attach message to a mobility management entity of the 3GPP access network, wherein the (re)attach message requests the activation of data bearers of the user equipment for communication in the 3GPP access network and is indicating to the mobility management entity that context information on the data bearers is available to the mobility management entity,
wherein the communication units is adapted to activate the data bearers based on the data bearer context information stored in said storage unit.

14. A user equipment for use in a 3GPP access network and a non-3GPP access network, comprising:
a storage unit for storing data bearer context information of data bearers of the user equipment in a 3GPP access network,
a communication unit for attaching the user equipment to a 3GPP access network or a non-3GPP access network,
a processing unit programmed to decide, while the user equipment is attached to the non-3GPP access network and in response to a new data flow, whether a new data bearer would be required for the new data flow in the 3GPP access network,
wherein the processing unit is further programmed to update, in response to the decision, the data bearer context information in said storage unit.

15. A mobility management entity for use in a 3GPP access network, comprising:
a storage unit for storing data bearer context information of data bearers of a user equipment, and for storing security context information of the user equipment,
a communication unit including a receiver for receiving a (re)attach message from the user equipment, wherein the (re)attach message requests the activation of data bearers of the user equipment for communication in the 3GPP access network and is indicating to the mobility management entity that context information is available to the mobility management entity, and
wherein the communication unit is adapted to trigger in response to the (re)attach message the activation of the data bearers based on the data bearer context information maintained by the mobility management entity for the user equipment.
